(19) Europäisches Patentamt
European Patent Office
Office européen des brevets

(11) **EP 3 315 952 A1**

(12) **EUROPEAN PATENT APPLICATION**
published in accordance with Art. 153(4) EPC

(43) Date of publication:
**02.05.2018 Bulletin 2018/18**

(51) Int Cl.:
***G01N 21/892*** (2006.01)

(21) Application number: **16814396.4**

(22) Date of filing: **22.06.2016**

(86) International application number:
**PCT/JP2016/068524**

(87) International publication number:
**WO 2016/208626 (29.12.2016 Gazette 2016/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **25.06.2015 JP 2015127657**

(71) Applicant: **JFE Steel Corporation
Tokyo 100-0011 (JP)**

(72) Inventors:
• **ONO, Hiroaki
Tokyo 100-0011 (JP)**

• **TATE, Masami
Tokyo 100-0011 (JP)**
• **OSHIGE, Takahiko
Tokyo 100-0011 (JP)**
• **KODAMA, Toshifumi
Tokyo 100-0011 (JP)**
• **KOSHIHARA, Takahiro
Tokyo 100-0011 (JP)**
• **OGAWA, Akihiro
Tokyo 100-0011 (JP)**
• **IIZUKA, Yukinori
Tokyo 100-0011 (JP)**

(74) Representative: **Haseltine Lake LLP
Bürkleinstrasse 10
80538 München (DE)**

(54) **SURFACE FLAW DETECTION METHOD, SURFACE FLAW DETECTION DEVICE, AND MANUFACTURING METHOD FOR STEEL MATERIAL**

(57) A surface defect detection method according to the present invention is a method of optically detecting a surface defect of a steel product, and includes an irradiating step of irradiating illumination lights from different directions to an identical inspection target portion by using at least two distinguishable light sources; and a detecting step of acquiring images by reflection lights of the respective illumination lights and detecting a surface defect in the inspection target portion by performing difference processing between the acquired images. An incident angle of the illumination lights of the respective light sources are within a range of 60° to 82.5° relative to the inspection target portion.

FIG.31

## Description

Field

The present invention relates to a surface defect detection method and a surface defect detection device that optically detect surface defects of a steel product, and to a method for manufacturing a steel product, the method detecting surface defects of the steel product using the surface defect detection method, and manufacturing the steel product on the basis of the detection results. Background

In recent years, from the viewpoint of improving yield by preventing mass incompatibility, it is desired that, in manufacturing processes of steel products, surface defects of a steel product are detected in hot or cold conditions. The term "steel product" as used herein refers to an article of iron or steel, such a steel sheet or a shaped steel, including, for example, a seamless steel pipe, a welded steel pipe, a hot-rolled steel sheet, a cold-rolled steel sheet, and a thick plate, and to a semifinished product, such as a slab, produced in the process of manufacturing the article of iron or steel. For this reason, as a method for detecting the surface defects of the steel product, a method has been developed in which a billet in the manufacturing process of a seamless steel pipe is irradiated with light, light reflected therefrom is received, and a determination is made on the basis of the light quantity of the reflected light as to whether a surface defect is present (refer to Patent Literature 1). A method has also been developed in which visible light beams in a plurality of wavelength regions that neither affect nor are affected by self-emitting light emitted from a hot steel product and do not affect each other are emitted from mutually symmetrical directions oblique to a normal line to the surface of the hot steel product, an image formed by combined reflected light beams and images formed by the individual reflected light beams are obtained in the normal direction to the surface of the hot steel product, and a surface defect of the hot steel product is detected from a combination of these images (refer to Patent Literature 2).

Citation List

Patent Literature

Patent Literature 1: Japanese Laid-open Patent Publication No. 11-37949
Patent Literature 2: Japanese Laid-open Patent Publication No. 59-52735

Summary

Technical Problem

According to the method described in Patent Literature 1, since harmless patterns and scale have different reflectance from that of a base steel portion, the sound harmless patterns or scale may be erroneously detected as the surface defects. For this reason, in the method described in Patent Literature 1, the billet is distinguished from the scale using the fact that the shape of the billet is linear. However, the surface defects of a steel product have not only linear shapes, but also various shapes, such as circular shapes. Therefore, the method described in Patent Literature 1 is difficult to be applied to the detection processing for the surface defects of the steel product. In the method described in Patent Literature 2, since a large number of types of surface defects, scale, harmless patterns and the like are present, simply combining the images is difficult to distinguish the surface defects from the scale or the harmless patterns. In addition, detection logic for dealing with a combination of a large number of images is realistically difficult to be established.

The present invention has been made in view of the above described problems, and an object thereof is to provide a surface defect detection method and a surface defect detection device that enable accurate distinction of the scale or the harmless patterns from the surface defects. Another object of the present invention is to provide a method for manufacturing a steel product, the method enabling the accurate distinction of the scale or the harmless patterns from the surface defects, and enabling manufacturing of the steel product on the basis of the distinction result.

Solution to Problem

To solve the problem and achieve the object, a surface defect detection method of optically detecting a surface defect of a steel product according to the present invention includes: an irradiating step of irradiating illumination lights from different directions to an identical inspection target portion by using at least two distinguishable light sources; and a detecting step of acquiring images by reflection lights of the respective illumination lights and detecting a surface defect in the inspection target portion by performing difference processing between the acquired images, wherein an incident angle of the illumination lights of the respective light sources are within a range of 60° to 82.5° relative to the inspection target portion.

Moreover, in the surface-defect detection method according to the present invention, the irradiating step includes a step of irradiating illumination lights by causing at least two flash light sources to emit light repeatedly such that light emission timing does not synchronize with each other, and/or a step of irradiating illumination lights of light sources, wavelength regions of which do not overlap with each other, and when the illumination lights of the light sources having the wavelength regions not overlapping one another are irradiated simultaneously, the detecting step includes a step of acquiring an image by a reflection light of each of the illumination lights by separating reflection lights of the respective mixed illumination lights by using filters that pass light having a wavelength identical to a wavelength of the illumination lights.

Moreover, in the surface defect detection method according to the present invention, the detecting step includes a first determining step of extracting a bright portion and a dark portion of an image that has been acquired by performing difference processing on the acquired images, and of determining whether a concavo-convex surface defect is present based on a positional relationship between the extracted bright portion and dark portion, and an irradiation directions of the illumination lights.

Moreover, a surface defect detection device that optically detects a surface defect of a steel product according to the present invention includes: an irradiating unit that irradiates illumination lights from different directions to an identical inspection target portion by using at least two distinguishable light sources; and a detecting unit that acquires images by reflection lights of the respective illumination lights and that detects a surface defect in the inspection target portion by performing difference processing between the acquired images, wherein an incident angle of the illumination lights of the respective light sources are within a range of 60° to 82.5° relative to the inspection target portion.

Moreover, a method for manufacturing a steel product according to the present invention includes: a step of detecting a surface defect of a steel product by using the surface defect detection method according to the present invention; and of manufacturing a steel product based on a result of detection.

Advantageous Effects of Invention

A surface defect detection method and a surface defect detection device according to the present invention can accurately distinguish scale or harmless patterns from surface defects. A method for manufacturing a steel product according to the present invention enables the accurate distinction of the scale or the harmless patterns from the surface defects, and enables manufacturing of the steel product on the basis of the distinction result. Brief Description of Drawings

FIG. 1 is a schematic diagram showing a configuration of a surface defect detection device of a first embodiment of the present invention.

FIG. 2 is a schematic diagram showing a configuration of a modification of an area sensor shown in FIG. 1.

FIG. 3 is a timing chart showing driving timing of a light source and the area sensor shown in FIG. 1.

FIG. 4 is a diagram showing one example of two two-dimensional images that have captured a surface defect, a scale, and a harmless pattern, and a difference image thereof.

FIG. 5 is a schematic diagram showing a configuration of a device used for an experiment to study a relationship between an incident angle of illumination light and a reflectivity of a sound portion (base steel portion).

FIG. 6 is a diagram showing a relationship between an incident angle of a laser and a light quantity received by a power meter.

FIG. 7 is a schematic diagram for explaining surface defect detection processing of a second mode of the present invention.

FIG. 8 is a schematic diagram for explaining surface defect detection processing of a third mode of the present invention.

FIG. 9 is a schematic diagram showing a configuration of a device used in an example.

FIG. 10 is a diagram showing a result of the surface defect detection processing of the example.

FIG. 11 is a diagram showing a result of the surface defect detection processing performed on a steel pipe portion at which a scale has appeared.

FIG. 12 is a schematic diagram showing a configuration of a modification of the surface defect detection device of the first embodiment of the present invention.

FIG. 13 is a schematic diagram showing a configuration of another modification of the surface defect detection device of the first embodiment of the present invention.

FIG. 14 is a diagram showing shadows created when light is irradiated from one direction when a surface shape of a target portion of inspection has a concave shape or a convex shape.

FIG. 15 is a diagram showing one example of a difference image of a surface defect having a concave shape.

FIG. 16 is a flowchart showing a flow of a method of calculating a positional-relationship of a bright portion and a dark portion using expansion processing.

FIG. 17 is a diagram showing one example of a difference image and a primary profile of a brightness pattern.

FIG. 18 is a diagram showing one example of a two-dimensional image of a filter and a primary profile.

FIG. 19 is a diagram showing one example of a difference image subjected to filter processing using a filter shown in FIG. 18 and a primary profile.

FIG. 20 is a schematic diagram showing a modification of an arrangement position of the light source.

FIG. 21 is a schematic diagram showing a brightness pattern that is acquired with the arrangement position of the light source shown in FIG. 20.

FIG. 22 is a diagram showing a result of the surface defect detection processing of the example.

FIG. 23 is a diagram for explaining a change of an image signal with a change of a positional relationship a surface of a concave-shaped defect relative to the light source.

FIG. 24 is a diagram showing a configuration of a two-dimensional model of an optical system.

FIG. 25 is a diagram showing a result of calibration of an image profile with respect to an ideal curve.

FIG. 26 is a diagram showing a configuration of the optical system.

FIG. 27 is a diagram showing an inclination of a surface of a surface defect portion.

FIG. 28 is a diagram showing an inclination of a surface of a sound portion.

FIG. 29 is a diagram showing a change of an SN ratio with respect to a change of an incident angle of the illumination light when the inclination of a surface of a sound portion is 3°.

FIG. 30 is a diagram showing a change of the SN ratio with respect to a change of an incident angle of the illumination light when the inclination of a surface of a sound portion is 5°.

FIG. 31 is a diagram showing changes of an image signal intensity and the SN ratio with respect to a change of an incident angle of the illumination light.

FIG. 32 is a diagram showing one example of a difference image.

FIG. 33 is a diagram showing a configuration of the optical system.

FIG. 34 is a diagram showing a result of the surface defect detection processing performed on a steel plate. Description of Embodiments

A configuration and an operation of a surface defect detection device of the first to the third embodiments of the present invention are explained below referring to the drawings.

(First Embodiment)

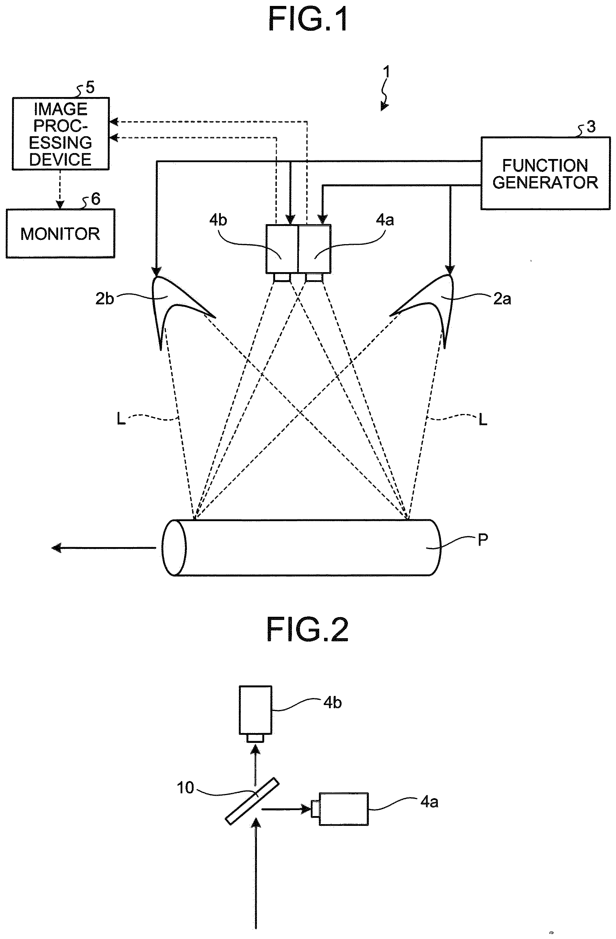

First, a configuration and an operation of a surface defect detection device of a first embodiment of the present invention are explained, referring to FIG. 1 to FIG. 13.

[Configuration of Surface Defect Detection Device]

FIG. 1 is a schematic diagram showing a configuration of a surface defect detection device of a first embodiment of the present invention. As shown in FIG. 1, a surface defect detection device 1 of the first embodiment of the present invention is a device that detects a surface defect of a steel pipe P in a cylindrical shape that is conveyed in a direction of an arrow in the figure, and that includes light sources 2a, 2b, a function generator 3, area sensors 4a, 4b, an image processing device 5, and a monitor 6 as main components.

The light sources 2a, 2b irradiate a distinguishable illumination light L at an identical inspection target portion on a surface of the steel pipe P, in accordance with a trigger signal from the function generator 3. It is desirable that the light sources 2a, 2b be arranged symmetrically with respect to the inspection target portion. Therefore, the light sources 2a, 2b are arranged so as to be shifted by an identical angle relative to the normal vector of the surface of the steel pipe P so that an irradiation direction vector of the illumination light L and the normal vector of the surface of the steel pipe P are on the same plane. The identity of incident angle described herein aims to equalize optical conditions as much as possible when the light sources in different directions are distinguished, and to suppress a signal of a sound portion including a scale and a harmless pattern significantly by difference processing. Moreover, as a signal of a sound portion is greatly dependent on a surface condition of a target, it is difficult to guarantee the identity simply with a uniform angle. Therefore, when a condition enabling an inspection is met, even if angles differ from each other a little, as long as a signal of a sound portion is suppressed by the difference processing, it is expressed as that angles are identical. Although it is described later, the condition enabling an inspection herein is a condition that regular reflection components are sufficiently removed, and that a light quantity is sufficient, and when the light quantity is sufficient, the incident angles can be increased as large as possible. Although in the present embodiment, the number of light sources is two, the number of light sources can be three or more as long as distinguishable. The distinguishable light sources herein signifies light sources with which quantities of reflection lights obtained from a target can be acquired per light source.

The area sensors 4a, 4b image two-dimensional images by reflection lights of the illumination lights L that are irradiated from the light sources 2a, 2b in accordance with the trigger signal from the function generator 3. The area sensors 4a, 4b input data of the imaged two-dimensional images to the image processing device 5. It is desirable that the area sensors 4a, 4b be arranged on the normal vector of an inspection target portion as much as possible, in a state in which imaging angles of view thereof can be kept.

To solve the problem of positioning, it is desirable that the area sensors 4a, 4b be positioned as close to each other as possible, to make respective optical axes as parallel to each other as possible. Furthermore, as shown in FIG. 2, either one of a half mirror 10, a beam splitter, and a prism can be used to adjust the optical axes of the area sensors 4a, 4b to be coaxial. Thus, a difference image described later can be acquired accurately.

The image processing device 5 is a device that detects a surface defect at an inspection target portion by performing the difference processing described later on two two-dimensional images input from the area sensors 4a, 4b. The image processing device 5 outputs information about the two-dimensional images input from the area sensors 4a, 4b, or a result of detection of a surface defect, to the monitor 6.

The surface defect detection device 1 having such a configuration distinguishes a scale or a harmless pattern at an inspection target portion from a surface defect by performing surface defect detection processing below. The surface defect described herein refers to a concavo-convex defect. Moreover, the scale or the harmless pattern signifies a surface coat or a portion that has a surface condition with different optical characteristics from a base steel portion having thickness of several $\mu$m to several tens of $\mu$m, and is a portion to be a cause of a noise in the surface defect detection processing. The following describes surface defect detection processing serving as first to third modes of the present invention.

[First mode]

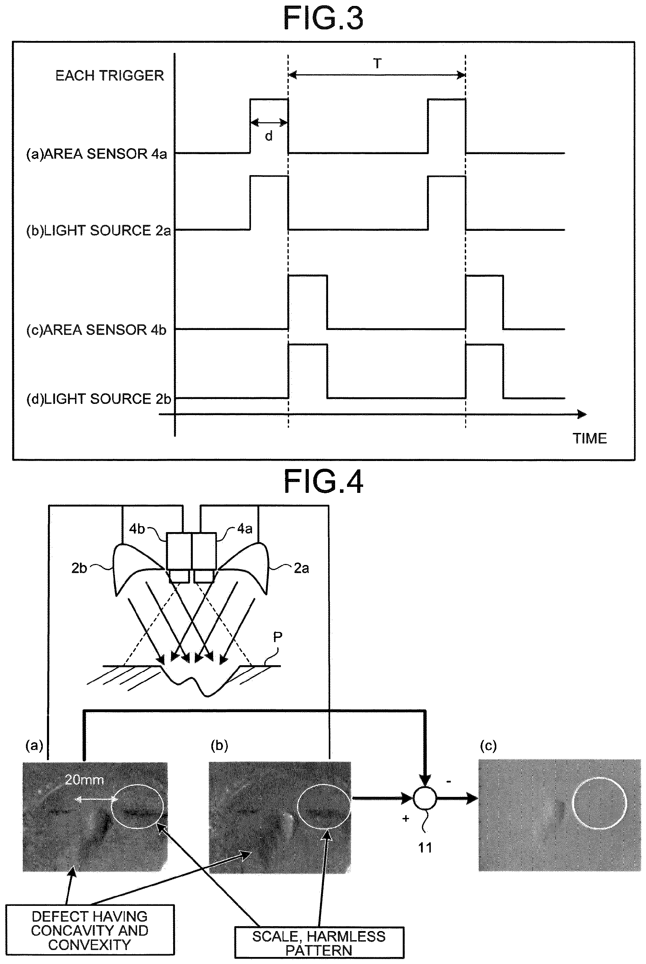

First, the surface defect detection processing of the first mode of the present invention is explained referring to FIG. 3 to FIG. 6.

FIG. 3 is a timing chart showing driving timing of the light sources 2a, 2b and the area sensors 4a, 4b. In the figure, d indicates a light emitting time of the light sources 2a, 2b, and T indicates a cycle of imaging a two-dimensional image by the area sensors 4a, 4b. in the surface defect detection processing of the first mode of the present invention, the light sources 2a, 2b are used as flash light sources, and the flash light sources are caused to emit light repeatedly such that the respective light emitting timings are not synchronized, thereby distinguishing the light sources 2a, 2b.

That is, as shown in FIG. 3, in the present mode, the function generator 3 first transmits a trigger signal to the light source 2a and the area sensor 4a, and the light source 2a irradiates the illumination light L, and the area sensor 4a completes imaging of a two-dimensional image within time d. After completion of imaging of the two-dimensional image by the area sensor 4a, the function generator 3 transmits a trigger signal to the light source 2b and the area sensor 4b, and a two-dimensional image is imaged similarly. According to the present mode, without causing light quantity reduction in a time difference d, two-dimensional images by individual reflection lights of the illumination lights L irradiated from the respective light sources can be imaged.

When a conveyance speed of the steel pipe P is high, it is preferable that the flash light sources have short light emitting time d. This is because as the light emitting time d becomes shorter, a shutter delay between two two-dimensional images acquired by the area sensors 4a, 4b becomes smaller, and a positional deviation between the two-dimensional images due to a shutter delay can be reduced. Moreover, when detection of a surface defect by using a difference image of the two-dimensional images of the respective reflection lights is aimed, the light emitting time d of the flash light sources is required to satisfy a condition indicated in Equation (1) below.

$$Light\ Emitting\ Time\ d(sec) \leq$$
$$Minimum\ Resolution(mm/pixel) \times$$
$$Allowable\ Positional\ Deviation(pixel)/Line\ Conveyance\ Speed(mm/sec)$$
$$(1)$$

When the size of a surface defect of a detection target is, for example, 20 mm, empirically, a signal of at least five square pixels is necessary to detect a surface defect, and therefore, the resolution of 4mm/pixel is necessary. Furthermore, in this case, the allowable positional deviation due to irradiation timing of the illumination lights L is, empirically, necessary to be within 0.2 pixel, and therefore, when the conveyance speed of the steel pipe P is 1, 3, 5 m/sec, the light emitting time of the light sources 2a, 2b are necessary to be 800, 270, 160 $\mu$sec or shorter, respectively. When the conveyance speed and the conveyance direction of the steel pipe P are consistent, this positional deviation can be corrected after imaging of the two-dimensional images.

In the present mode, the image processing device 5 performs image processing, such as calibration, shading correction, and noise removal, using camera parameters that have been derived in advance for the two-dimensional images input from the area sensors 4a, 4b, and then performs the difference processing between the two-dimensional images, thereby detecting a surface defect at an inspection target portion.

Specifically, when a luminance value of each pixel constituting a two-dimensional image Ia that is been acquired when the illumination light L is irradiated from the light source 2a is denoted as Ia(x, y) (where the number of pixels is XxY, an x-coordinate is $1 \le x \le X$, and a y-coordinate is $1 \le y \le Y$), a luminance value of each pixel constituting a two-dimensional image Ib that is acquired when the illumination light L is irradiated from the light source 2b is denoted as Ib(x, y), a luminance value I_diff(x, y) of each pixel of a difference image I_diff thereof is expressed by Equation (2) below.
[Eq. 2]

$$I\_diff(x,\ y)\ =\ Ia(x,\ y)\ -\ Ib(x,\ y) \tag{2}$$

Examples of the two-dimensional images Ia, Ib that have captured a surface defect, and a scale and a harmless pattern, which are not defects, and the difference image I_diff thereof are given in FIG. 4(a), (b), (c), respectively. As shown in FIG. 4(a), (b), (c), in a sound portion, regardless of a scale or a harmless pattern, an angle between a normal vector and the light source 2a and an angle between a normal vector and the light source 2b are equal to each other. Therefore, luminance value Ia (x, y)=luminance value Ib(x, y), that is, luminance value I_diff(x, y)=0 is obtained. However, in the surface defect portion, as the surface has a concave and convex shape, a portion in which the angle between the normal vector and the light source 2a and the angle between the normal vector and the light source 2b are not equal to each other is undoubtedly present. Therefore, luminance value Ia(x, y)≠luminance value Ib(x, y), that is, luminance value I_diff(x, y)≠0 is obtained.

Therefore, by generating a difference image of two two-dimensional images by a difference unit 11, a scale or a harmless pattern that is not a defect is removed, and only a surface defect can be detected. By thus detecting a surface defect only, final evaluation of a surface defect whether to be harmful is performed based on various feature values, and a result of the evaluation is displayed on the monitor 6.

When there is a positional deviation between two two-dimensional images that influences a difference image, it is desirable that the influence of the positional deviation between the two-dimensional images be reduced by filtering with a two-dimensional low-pass filter. In this case, when the two-dimensional low-pass filter is denoted as H, a luminance value I'_diff(x, y) of the difference image is expressed by Equation (3) below.

$$I'\_diff(x,\ y)\ =\ H\ *\ (Ia(x,\ y)\ -\ Ib(x,\ y)) \tag{3}$$

Moreover, it is preferable that the light sources 2a, 2b be of the same type, the respective light sources irradiate parallel rays as uniform as possible, and an inspection target portion be close to a plane. However, also in application to a surface that is, to some extent, uneven or a mild curved surface such as the steel pipe P, a surface defect can be detected by using general shading correction.

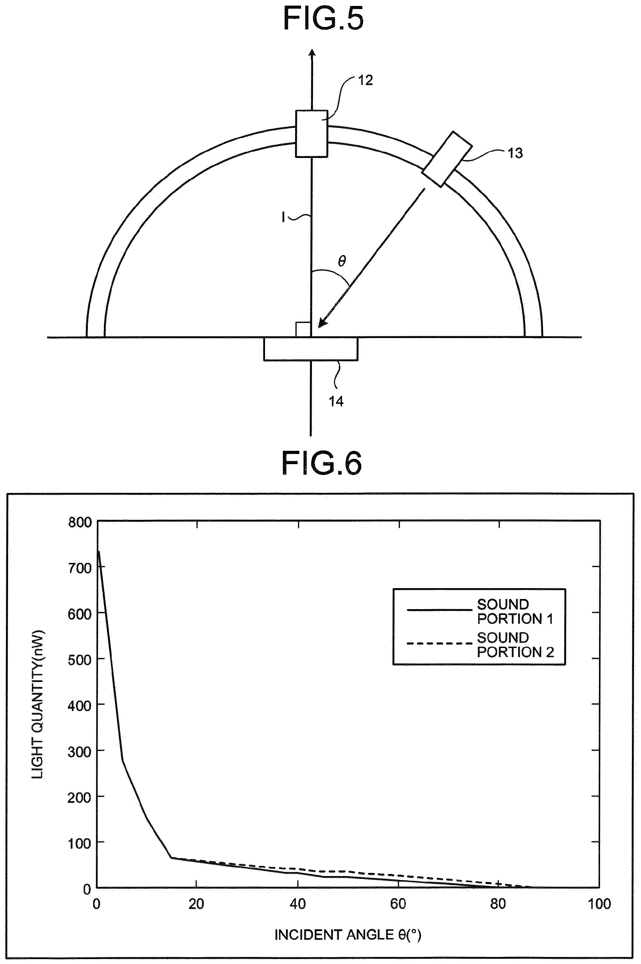

Furthermore, it is desirable that an incident angle of the illumination light L be within such a range that a reflection light of a sound portion does not include a mirror reflection component, and a sufficient light quantity is obtained. The inventors of the present invention had an experiment to research a relationship between an incident angle of the illumination light L and a refractivity of a sound portion (base steel portion). A configuration of a device used in the experiment is shown in FIG. 5. As shown in FIG. 5, in this experiment, a power meter 12 was fixed at a position on a normal vector I with respect to a position of a target on a surface of a cast piece sample 14. Light receiving quantities of the power meter 12 when an incident angle θ of a laser 13 relative to the normal vector I is changed from 0° to 90° were measured. The results of the experiment are shown in FIG. 6. As shown in FIG. 6, while in a range from 0° to 90° of the incident angle θ, the light receiving quantities of the power meter 12 are large as a mirror reflection component is included, when the incident angle θ becomes 60° or larger, the light receiving quantity of the power meter 12 significantly decreases. Therefore, as long as there is no problem in the detectivity, the smaller the incident angle of the illumination light L is, the larger the light receiving quantity is obtained.

The resolution in a depth direction of an inspection target portion is dependent on an inclination angle of a defect and the resolution of the area sensors 4a, 4b. The inclination angle of a defect is an angle formed between a "normal vector of a defect portion" that is orthogonally projected on a "plane formed with a normal vector of a surface of a sound portion of the inspection target portion and a vector of a direction of a light source" and the normal vector of the surface of the sound portion. Although it is also dependent on a surface condition of the inspection target portion, it is confirmed that if the inclination angle of a defect is approximately 10° or larger relative to the direction of the light source when incident light is irradiated, for example, at the incident angle 45°, a defect signal can be detected by the difference processing. Therefore, assuming that the resolution of one pixel is 0.5 mm, the resolution in a depth direction of about $0.5 \times \tan 10° = 0.09$ mm is to be obtained theoretically.

[Second mode]

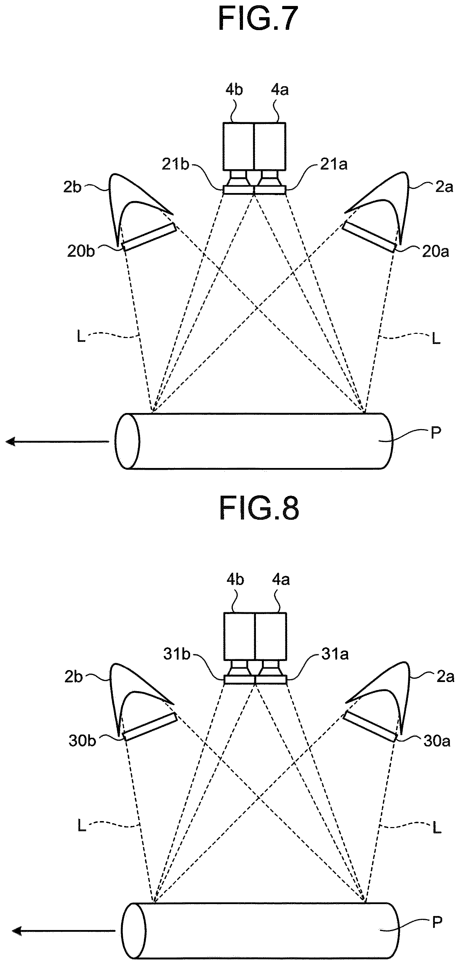

Next, surface defect detection processing of a second mode of the present invention is explained referring to FIG. 7.

In the surface defect detection processing of the second mode of the present invention, by using light sources having wavelength regions not overlapping one another as the light source 2a, 2b, the light source 2a, 2b are distinguished. Specifically, as shown in FIG. 7, two kinds of wavelength selection filters 20a, 20b, wavelength regions of which do not overlap with the light sources 2a, 2b are arranged, and a wavelength region of the illumination light L is selected. Moreover, wavelength selection filters 21a, 21b having the same wavelength selection properties are arranged in the area sensors 4a, 4b.

With such a configuration, a reflection light of the illumination light L from the light source 2a is received only by the area sensor 4a by the wavelength selection filters 20a, 21a, and a reflection light of the illumination light L from the light source 2b is received only by the area sensor 4b by the wavelength selection filters 20b, 21b. Therefore, by matching the imaging timing of the area sensors 4a, 4b, two-dimensional images by reflection lights of the illumination lights L from the light sources 2a, 2b can be obtained without a positional deviation. The processing after imaging two-dimensional images is the same as that of the first mode.

When a moving speed of an inspection target portion is high, to prevent a positional deviation due to movement of the inspection target portion, the light sources 2a, 2b can be used in a form of flash light sources, and the imaging time of two-dimensional images can be shortened without changing irradiation timing of the light sources 2a, 2b. Furthermore, it can be configured such that a blue transmission filter is used as the wavelength selection filter 20a, a green transmission filter is used as the wavelength selection filter 20b, and a two-dimensional image is imaged by using one unit of a color camera, and only a reflection light of the illumination light L from the light source 2a is received by a blue channel and only a reflection light of the illumination light L from the light source 2b is received in a green channel.

[Third mode]

Next, surface defect detection processing of a third mode of the present invention is explained referring to FIG. 8.

In the surface defection detection processing of the third mode of the present invention, by using light sources having linear polarization properties orthogonal to each other are used as the light sources 2a, 2b, the light sources 2a, 2b are distinguished. Specifically, as shown in FIG. 8, linear polarizing plates 30a, 30b are arranged at $\gamma°$ and $(\gamma+90)°$ ($\gamma$ is an arbitrary angle) at the light sources 2a, 2b, and only light of polarization components orthogonal to each other is passed. The linear polarizing plate signifies a filter that passes only a linear polarization component in a certain direction of incident light. Moreover, linear polarizing plates 31a, 31b having the same linear polarization properties as the linear polarizing plates 30a, 30b are arranged at $\gamma°$ and $(\gamma+90)°$ at the area sensors 4a, 4b.

With such a configuration, a reflection light of the illumination light L from the light source 2a is received only by the area sensor 4a, and a reflection light of the illumination light L from the light source 2b is received only by the area sensor 4b. Therefore, by matching the imaging timing of the area sensors 4a, 4b, two-dimensional images by reflection lights of the illumination lights L from the respective light sources can be obtained without a positional deviation.

When a moving speed of an inspection target portion is high, the light sources 2a, 2b can be used in a form of flash light sources, and the imaging time of two-dimensional images can be shortened without changing irradiation timing of the light sources 2a, 2b. Thereafter, the positioning and the processing after imaging two-dimensional images is the same as those of the first and the second modes.

[Example]

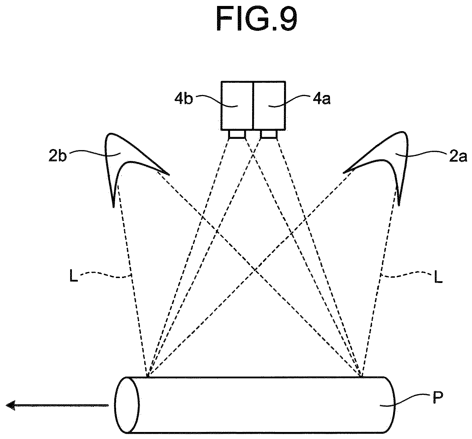

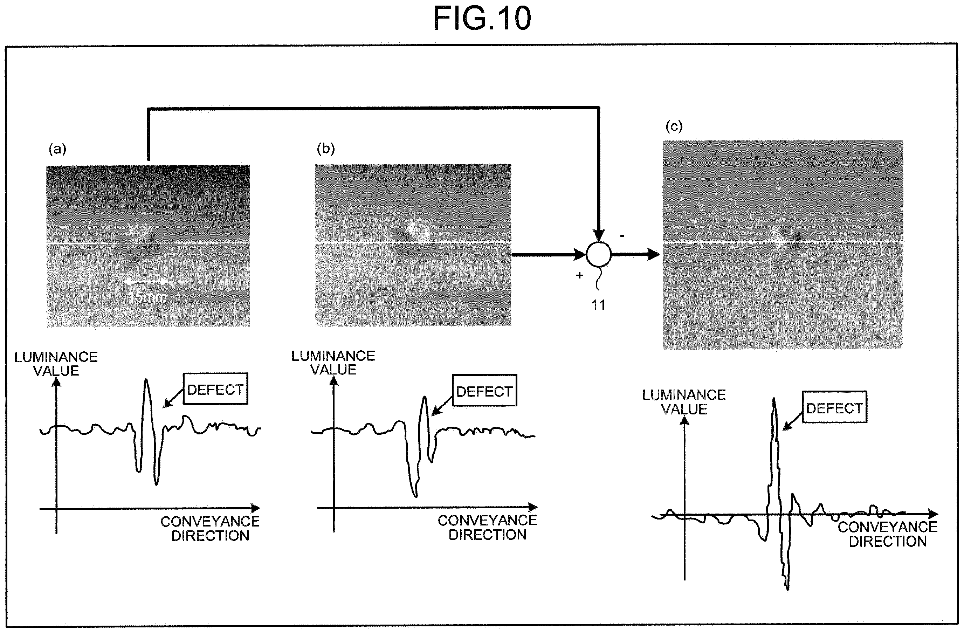

In the present example, as shown in FIG. 9, flash light sources were used as the light sources 2a, 2b, and a surface defect of the steel pipe P was detected by using the method of varying light emitting timing of the light sources 2a, 2b. The area sensors 4a, 4b were arranged in side-by-side and imaged two-dimensional images, and positioning was performed by image processing. FIG. 10 depicts a result of the surface defect detection. FIG. 10(a) is a two-dimensional image that is acquired when the illumination light L is irradiated from the light source 2a, FIG. 10 (b) is a two-dimensional image that is acquired when the illumination light L is irradiated from the light source 2b, and FIG. 10(c) is a difference image between the two-dimensional image shown in FIG. 10 (a) and the two-dimensional image shown in FIG. 10 (b). SN ratios of the images shown in FIG. 10 (a) to (c) are, sequentially 3.5, 3.5, and 6.0, and the SN ratio of the difference image was improved compared to when the illumination light L is irradiated simply from one direction.

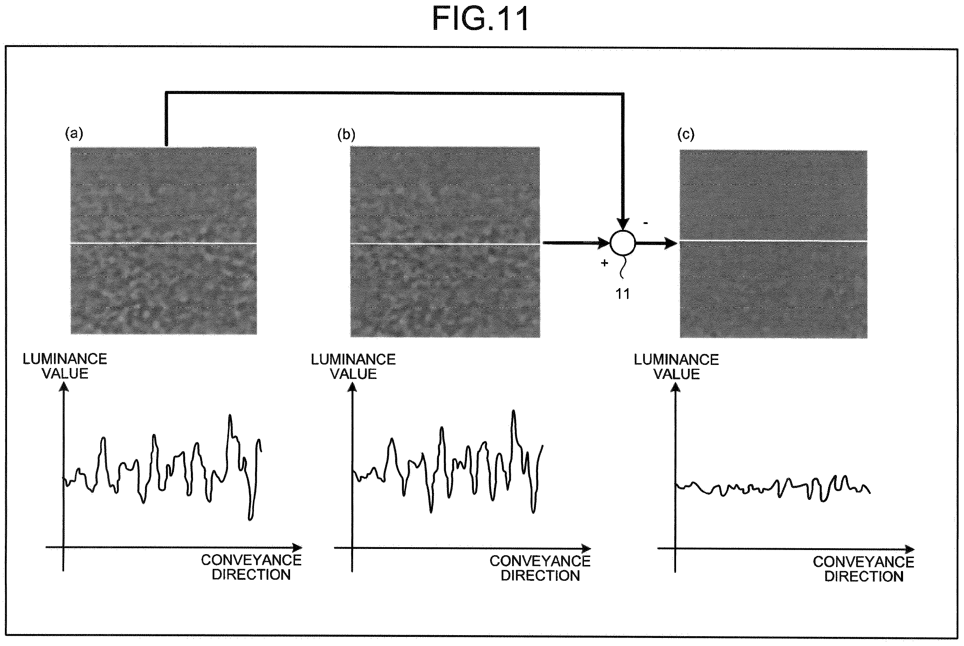

FIG. 11 is a diagram showing a result of the surface defect detection processing performed on a steel pipe portion at which a scale has appeared. FIG. 11 (a) is a two-dimensional image that is acquired when the illumination light L is irradiated from the light source 2a, FIG. 11 (b) is a two-dimensional image that is acquired when the illumination light L is emitted from the light source 2b, and FIG. 11 (c) is a difference image between the two-dimensional image shown in FIG. 11 (a) and the two-dimensional image shown in FIG. 11 (b). Black spots spread throughout the two-dimensional images shown in FIG. 11 (a) and (b) are a scale to be a noise. As the shape of the scale is flat, by acquiring the difference image, the image of the scale was removed. In addition, in the difference image, a signal of the scale to be a noise was suppressed to about 1/4, compared to a case when the illumination light L is irradiated simply from one direction.

[Modification 1]

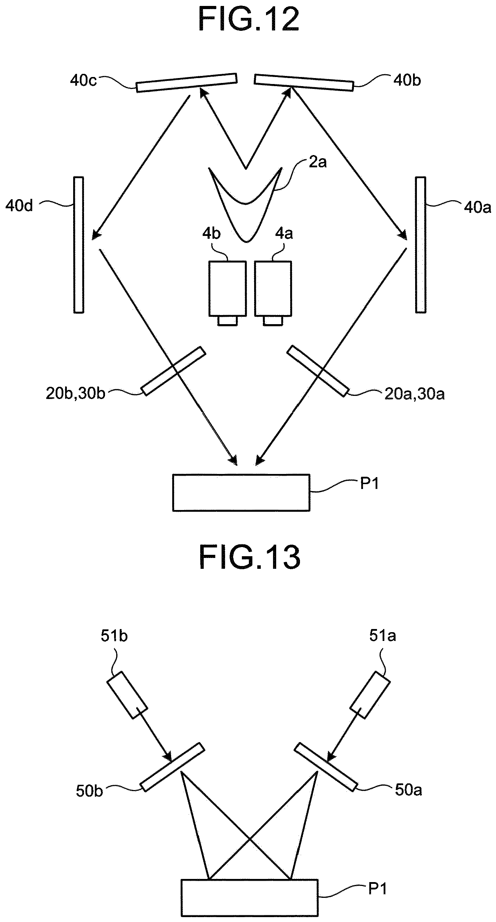

FIG. 12 is a schematic diagram showing a configuration of a modification of the surface defect detection device of the first embodiment of the present invention. As shown in FIG. 12, in the present modification, an illumination light irradiated from a single unit of the light source 2a is divided by mirrors 40a, 40b, 40c, 40d, and is irradiated to an inspection target portion of the steel pipe P1 finally from two directions. In this case, by arranging the wavelength selection filters 20a, 20b, or the linear polarizing plates 30a, 30b in respective optical paths, an effect similar to the second and the third modes can be obtained. Although the present modification is to irradiate the illumination light from two directions, the same applies also when the illumination light is irradiated from three or more directions.

[Modification 2]

FIG. 13 is a schematic diagram showing a configuration of another modification of the surface defect detection device of the first embodiment of the present invention. As shown in FIG. 13, in the present modification, in the surface defect detection device shown in FIG. 7, a wavelength of a light source is limited not by the wavelength selection filters 20a, 20b, but a wavelength of a light source is limited by using pulse lasers 51a, 51b, and diffusers 50a, 50b. In the present modification, laser beams from the pulse lasers 51a, 51b having different wavelength regions from each other are irradiated from right and left directions of the inspection target portion, thereby distinguishing light sources. At this time, to irradiate the laser beams emitted from the pulse lasers 51a, 51b on an entire region of the inspection target region, the diffusers 50a, 50b are inserted in the optical paths of the laser beams. Although in the present modification, the illumination light is irradiated from two directions, the same applies to a case in which the illumination light is irradiated from three or more directions.

[Modification 3]

In the present modification, in the surface defect detection device shown in FIG. 7, instead of the wavelength selection filters 21a, 21b arranged at the area sensors 4a, 4b, a dichroic mirror is used. The dichroic mirror is a mirror that reflects light of a specific wavelength component, and passes light of other wavelength components. By using the dichroic mirror, the wavelength selection filters become unnecessary. Although in the present modification, the illumination light is irradiated from two directions, the same applies to a case in which the illumination light is irradiated from three or more directions.

[Second Embodiment]

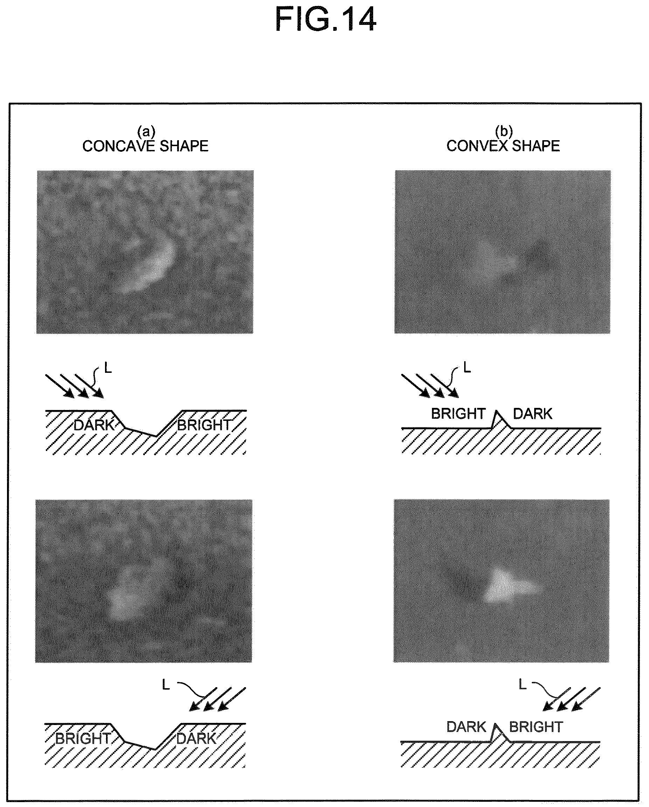

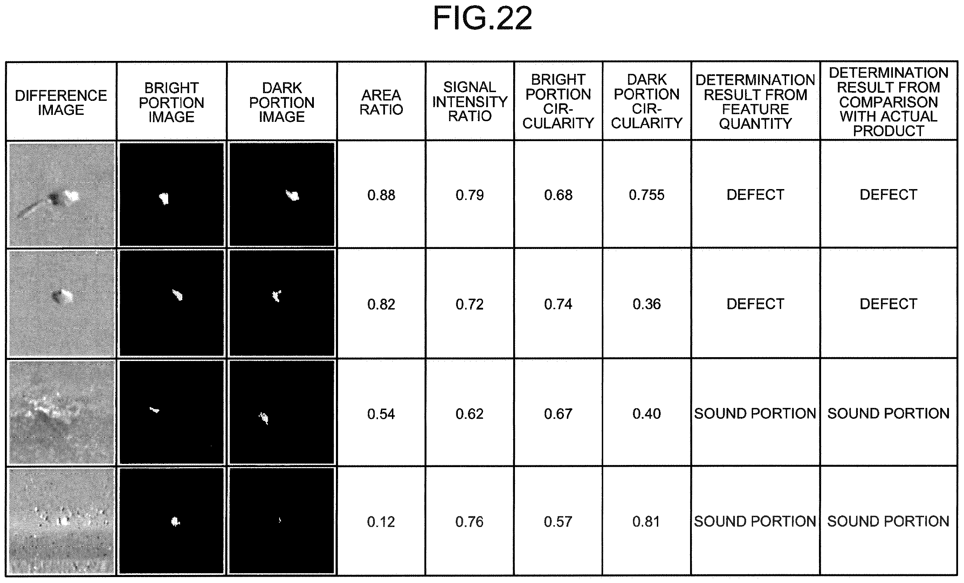

Next, a configuration and an operation of a surface defect detection device according to a second embodiment of the present invention are explained referring to FIG. 14, and FIG. 22. As the configuration of the surface defect detection device of the present embodiment is the same as the configuration of the surface defect detection device of the first embodiment described above, explanation of the configuration is omitted below, and only the operation of the surface defect detection device is explained.

The surface defect detection device 1 of the second embodiment of the present embodiment distinguishes a scale or a harmless pattern at an inspection target portion from a concavo-convex surface defect by performing surface defection detection processing described below. The scale or the harmless pattern signifies a surface coat or a portion that has a surface condition with different optical characteristics from a base steel portion having thickness of several $\mu$m to several tens of $\mu$m, and is a portion to be a cause of a noise in the surface defect detection processing.

[Surface Defect Detection Processing]

In the surface defect detection processing of the second embodiment of the present invention, the image processing device 5 performs image processing such as calibration, shading correction, and noise removal, using camera parameters that have been derived in advance for two two-dimensional images input from the area sensors 4a, 4b, and then performs difference processing between the two-dimensional images to generate a difference image, and detects a concavo-convex surface defect at the inspection target portion is detected from the generated difference image.

Specifically, when a luminance value of each pixel constituting the two-dimensional image Ia that is been acquired when the illumination light L is irradiated from the light source 2a is denoted as Ia(x, y) (where the number of pixels is XxY, an x-coordinate is 1≤x≤X, and a y-coordinate is 1≤y≤Y), a luminance value of each pixel constituting the two-dimensional image Ib that is acquired when the illumination light L is irradiated from the light source 2b is denoted as Ib(x, y), the luminance value I_diff(x, y) of each pixel of the difference image I_diff acquired by the difference processing is expressed by Equation (1) that has already been described.

As shown in FIG. 4, in a sound portion, regardless of presence or absence of a scale or a harmless pattern, an angle between a normal vector of a surface and the light source 2a and an angle between a normal vector of a surface and the light source 2b are equal to each other. Therefore, luminance value Ia(x, y)=luminance value Ib(x, y), that is, luminance value I_diff(x, y)=0 is obtained. However, in the concavo-convex surface defect portion, as the surface has a concave and convex shape, a portion in which the angle between the normal vector of the surface and the light source 2a and the angle between the normal vector of the surface and the light source 2b are not equal to each other is undoubtedly present. Therefore, luminance value Ia(x, y)≠luminance value Ib(x, y), that is, luminance value I_diff(x, y)≠0 is obtained. Thus, by generating a difference image I_diff of two two-dimensional images by a difference unit 11, an image of a sound portion with a scale or a harmless pattern, which is not a defect, can be removed.

Next, a logic of detecting a concavo-convex surface defect from the difference image I_diff is explained. FIG. 14 (a), (b) depict shades when illumination light is irradiated to an inspection target portion from one of the light sources when surface of the inspection target portion shapes are a concave shape and a convex shape, respectively. As shown in FIG. 14 (a), when the surface shape is a concave shape, a portion closer to the light source is dark as a light quantity of the illumination light per unit area decreases, and a portion on the opposite side to the light source is bright as it is closer to the regular reflection direction. On the other hand, as shown in FIG. 14 (b), when the surface shape of the inspection target portion is a convex shape, a portion closer to the light source is bright as it is closer to the regular reflection direction, and a portion on the opposite side to the light source is dark as it is in a shade of the convex shape.

That is, brightness patterns of reflection lights of the illumination light vary depending on a surface shape of an inspection target portion being a concave shape or a convex shape. Therefore, by recognizing brightness patterns of reflection lights, presence or absence of a concavo-convex surface defect can be detected. In the following, a method of detecting a concavo-convex surface defect by recognition of brightness patterns of reflection lights is described. In the following, out of concavo-convex surface defects, a surface defect of a concave shape is to be detected, but a surface defect of a convex shape can also be detected by the same logic. Moreover, a bright portion described below signifies a blob that has an area equal to or larger than a predetermined value obtained by performing linkage processing of pixels having brightness equal to or higher than a predetermined threshold in the difference image I_diff. Furthermore, a dark portion described below signifies a blob that has an area equal to or larger than a predetermined value obtained by performing the linkage processing of pixels having brightness equal to or lower than a predetermined threshold in the difference image I_diff. Blob signifies a set of labeled pixels.

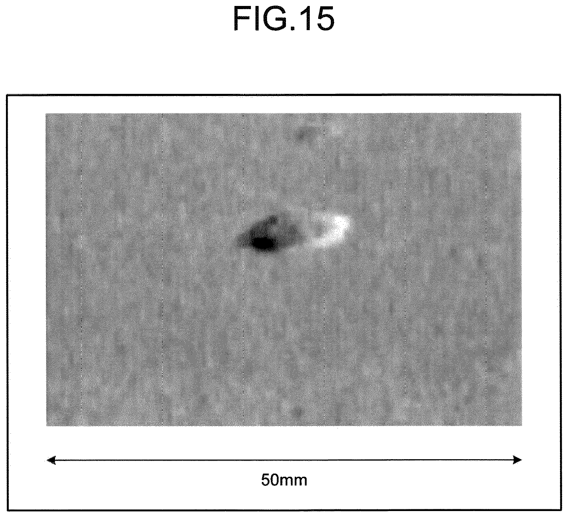

In the present embodiment, a bright portion and a dark portion are extracted by performing threshold processing, and a brightness pattern is thereby recognized. Specifically, in the surface defect detection device 1 of the present embodiment, as the light sources 2a, 2b are arranged symmetrically about a normal vector of an inspection target portion, brightness patterns of reflection lights caused by a convex and concave shape on a surface are generated in left and right directions. Because bright/dark are positioned opposite on right and left depending on order of the difference processing, in this example, when a right side is bright and a left side is dark, it is a concave shape, and when a right side is dark and a left side is bright, it is a convex shape. Therefore, the difference image I_diff of a surface defect in a concave shape is as shown in FIG. 15. When each of images of a bright portion and a dark portion are binarized by brightness thresholds The and -The, binarized images I_blight, I_dark of the bright portion and the dark portion are expressed as in Equation (4) below.

$$I\_blight(x,y)=1(when\,I\_diff(x,y)\geq The)$$
$$I\_blight(x,y)=0(when\,I\_diff(x,y)< The)$$
$$I\_dark(x,y)=1(when\,I\_diff(x,y)\leq -The)$$
$$I\_dark(x,y)=0(when\,I\_diff(x,y)> -The)$$

$$(4)$$

After thus binarizing the image of the bright portion and the dark portion, and performing linkage and isolated-point removal as necessary, a positional relationship of the bright portion and the dark portion are calculated, thereby detecting presence or absence of a concavo-convex surface defect. Note that there are various methods as a calculation method of a positional relationship of a bright portion and a dark portion, and representative three calculation methods are described below, but another calculation method can also be applied as long as a positional relationship of a bright portion and a dark portion can be calculated.

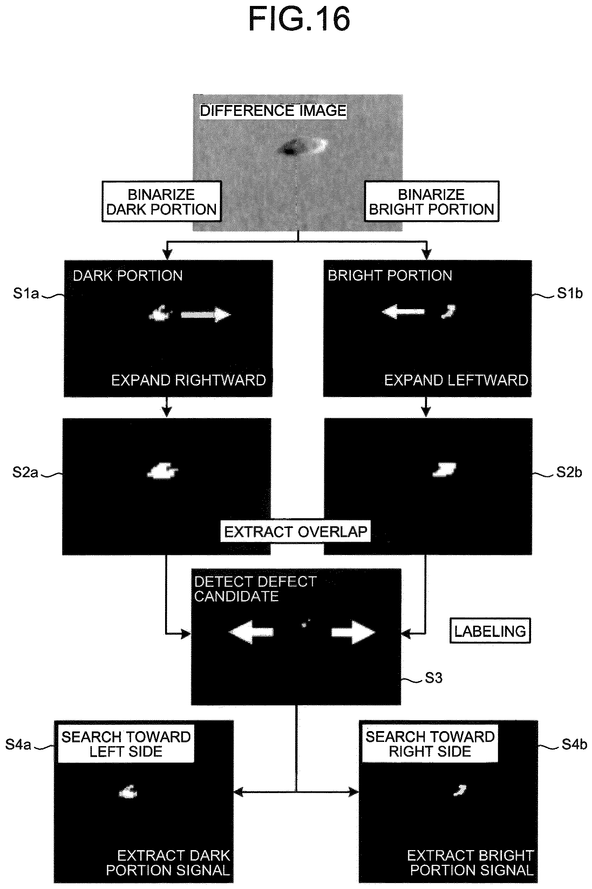

A first positional-relationship calculation method is a method of calculating a positional relationship of a bright portion and a dark portion by subjecting a bright portion and a dark portion to expansion and contraction processing in a specific direction. A flowchart of this calculation method is shown in FIG. 16. In the present embodiment, a case of recognizing a brightness pattern in which a right side is bright and a left side is dark to detect a surface defect in a concave shape is explained. That a right side is bright and a left side is dark means that a dark portion is always present on a left side of a bright portion, and that a bright portion is always present on a right side of a dark portion. Therefore, in this calculation method, first, the image processing device 5 performs expansion processing in a left direction for a bright portion (steps S1a, S1b). When images of the bright portion and the dark portion subjected to the expansion processing are I_blight_extend, I_dark_extend, and a length to be expanded is W, the expansion processing is expressed as in Equation (5) below where an upper left point of a two-dimensional image is an origin point, a downward direction is a y-axis positive direction, and a rightward direction is an x-axis positive direction.

$$I\_blight\_extend(x1,y)=1 \quad x-W\leq x1\leq x(when\,I\_blight(x,y)=1)$$
$$I\_dark\_extend(x1,y)=1 \quad x\leq x1\leq x+W(when\,I\_dark(x,y)=1)$$

$$(5)$$

In the present embodiment, the bright portion and the dark portion are expanded by the same length W, but the length W to be expanded is not required to be the same, and in an extreme case, only one of the bright portion and the dark portion can be subjected to the expansion processing. Moreover, the length W to be expanded depends also on the size of a surface defect wished to be detected.

Next, as expressed by Equation (6) below, the image processing device 5 performs and processing on the images of the bright portion and the dark portion I_blight_extend, I_dark_extend subjected to the expansion processing, and thereby extracts an overlapped portion of the images of the bright portion and the dark portion I_blight_extend, I_dark_extend subjected to the expansion processing, as a defect candidate image I_defect (steps S2a, S2b) .

$$I\_defect = I\_blight\_extend \& I\_dark\_extend \quad (6)$$

Next, the image processing device 5 performs linkage and isolated-point removal processing for each of the acquired defect candidate images I_defect as necessary, and then performs labeling processing, thereby generating a defect candidate blob I_defect_blob (step S3). The image processing device 5 then extracts a feature quantities of each of the defect candidate blobs I_defect_blob, and determined whether each of the defect candidate blobs I_defect_blob is a surface defect of a concave shape based on a result of extraction (steps S4a, S4b). As information about the bright portion and the dark portion is necessary to find a feature quantities of the defect candidate blob I_defect_blob, the bright portion and the dark portion are reconstructed from the detect candidate blob I_defect_blob.

Specifically, because a bright portion is always present on a right side, and a dark portion is always present on a left side of a defect candidate portion, the image processing device 5 searches the dark portion binarized image I_dark toward the left side from a centroid of the defect candidate blob I_defect_blob as a starting point, and regards a blob found first as a dark portion defect candidate blob I_dark_blob. Similarly, the image processing device 5 searches the bright portion binarized image I_blight toward the right side from the centroid of the defect candidate blob I_defect_blob as a starting point, and regards a blob first found as a bright portion defect candidate blob I_blight_blob. The image processing device 5 extracts a feature quantities from the bright portion defect candidate blob I_blight_blob and the dark portion defect candidate blob I_dark_blob thus reconstructed, and determines whether each of the defect candidate blobs I_defect_blob is a surface defect of a concave shape based on the extracted feature quantities. As a specific feature quantities varies depending on a defect, it is not specifically described herein, but one example is given in an example.

In a second positional-relationship calculation method, after performing the threshold processing described above, and performing the linkage and isolated-point removal processing as necessary, a bright portion and a dark portion are extracted to be subjected to labeling, and by recognizing a positional relationship of the bright portion and the dark portion, a surface defect of a concave shape is detected. Specifically, first, the image processing device 5 recognizes a bright portion and a dark portion individually by labeling, and acquires information of a centroid of the bright portion and the dark portion. Next, the image processing device 5 determines whether a centroid of the dark portion is present in a predetermined range on a right side of each of the bright portions based on the information of a centroid of the bright portion and the dark portion. When the centroid of the dark portion is present therein, the image processing device 5 recognizes a combination of the bright portion and the dark portion be a pair, as a brightness pattern, and determines whether it is a surface defect of a concave shape by performing feature quantity analysis of the brightness pattern. Although the brightness pattern is recognized using the information of a centroid herein, information used for recognition of a brightness pattern is not necessarily required to be information of a centroid as long as it is information with which positions of the bright portion and the dark portion can be grasped (for example, an upper end position, a lower end position, and the like)

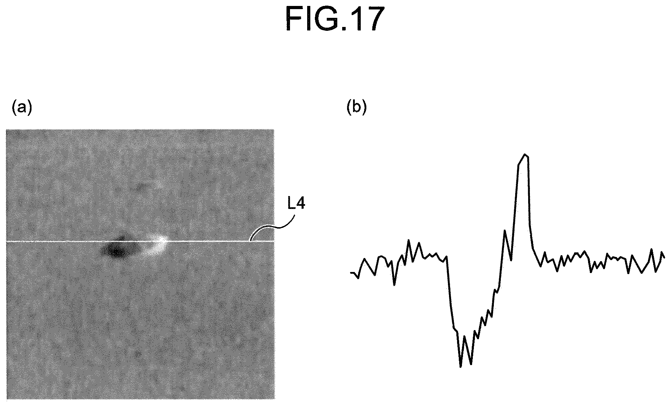

In a third positional-relationship calculation method, without performing the threshold processing described above, a brightness pattern is recognized by using a filter, and a surface defect is thereby detected. Specifically, in the surface defect detection device 1 shown in FIG. 1, as the light sources 2a, 2b are arranged symmetrically about a normal vector of an inspection target portion, a brightness pattern of a reflection light caused by a convex and concave shape on a surface is generated in left and right directions. FIG. 17 (a), (b) show one example of a difference image and a one-dimensional profile of a brightness pattern at a line segment L4 shown in FIG. 17 (a), respectively.

As shown in FIG. 17. (a), (b), in a surface defect of a concave shape, as a right side is bright and a left side is dark, the one-dimensional profile of the brightness pattern is to be a one-dimensional profile having a characteristic that a peak is present on a right side and a valley is present on a left side. Therefore, in the present embodiment, a filter H in which a right has a peak and a left side has a valley is generated in advance, and as indicated in Equation (7) below, by applying the filter H to the difference image I_diff, high frequency noises are reduced, and a two-dimensional image I_cont in which only a brightness pattern is emphasized is generated.

$$I\_cont = H * I\_diff \tag{7}$$

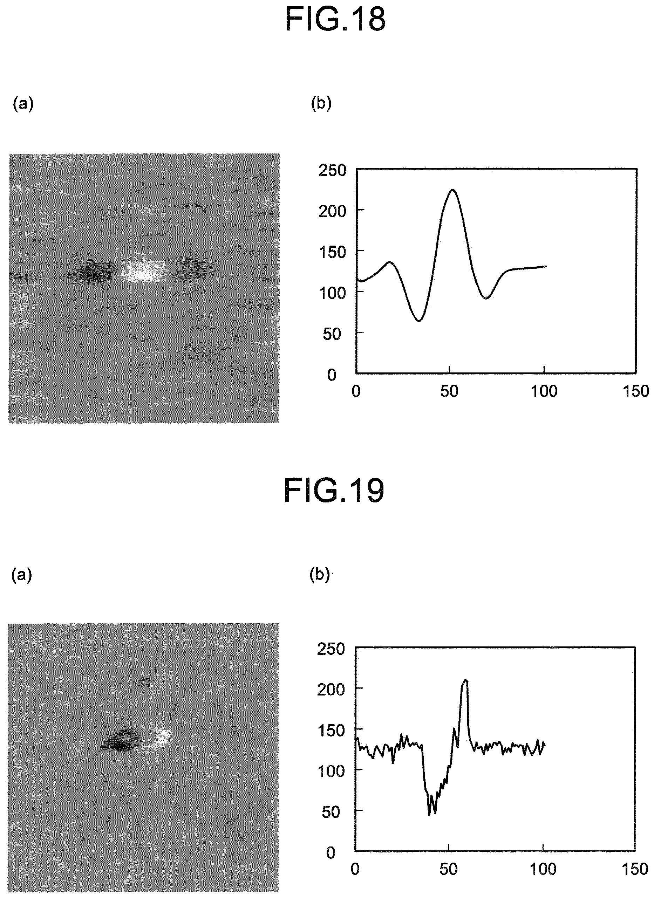

FIG. 18 (a), (b) show a two-dimensional image of the filter H that is generated in advance, and one example of a one-dimensional profile thereof on a left side and a right side, respectively. FIG. 19 (a), (b) show a difference image obtained by performing filter processing using the filter H shown in FIG. 18 (a), (b), and one example of a one-dimensional profile thereof of a left side and a right side, respectively. As shown in FIG. 19 (a), (b), it is found that a two-dimensional image in which high frequency noises are reduced, and only the brightness pattern is emphasized is obtained.

Note that it can be arranged to support many surface defect sizes by preparing several kinds of filters having different ranges in a width direction as necessary. The image processing device 5 performs the linkage and isolated-point removal processing as necessary on the two-dimensional image in which the brightness pattern is thus emphasized, and then performs the threshold processing, thereby extracting the defect candidate image I_defect. The image processing device 5 then detects a surface defect of a concave shape by subjecting the extracted defect candidate image I_defect to processing similar to that in the first positional-relationship calculation method.

As is obvious from the above explanation, the surface defect detection processing of the second embodiment of the present invention irradiates the illumination lights L to the same inspection target portion from different directions at substantially identical incident angles using the two distinguishable light sources 2a, 2b, acquires images formed by reflection lights of the respective illumination lights L, extracts a bright portion and a dark portion of an image acquired by performing the difference processing between the acquired images, and determines whether a concavo-convex surface defect is present based on a positional relationship of the extracted bright portion and dark portion, and the irradiation directions of the illumination lights L, and therefore, can distinguish a scale or a harmless pattern from a concavo-convex surface defect accurately.

Although in the present embodiment, as the light sources are arranged bilaterally symmetrically on right and left sides, brightness patterns of right and left are recognized, even if the light sources are arranged not bilaterally, but vertically symmetrically, or not symmetrically, a concavo-convex surface defect can be detected by similar processing.

Specifically, when the light sources are arranged vertically symmetrically, only the directions of the brightness patterns are changed from a lateral direction to a vertical direction. Therefore, by rotating the brightness patterns by 90°, a concavo-convex surface defect can be detected by similar processing.

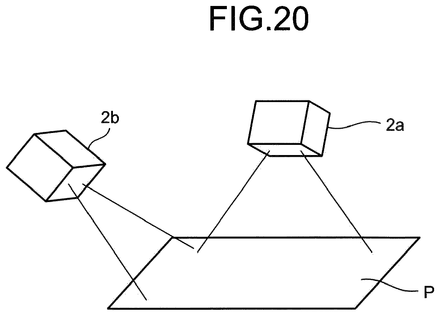

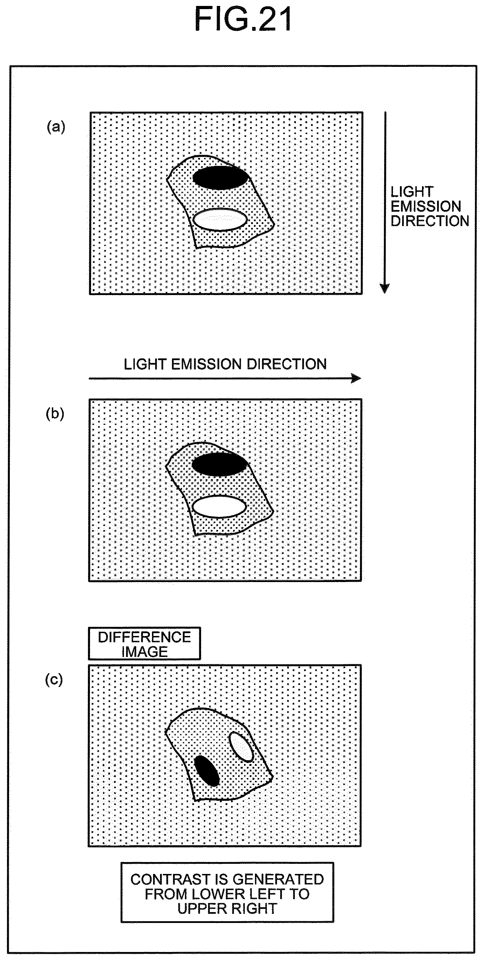

Furthermore, as shown in FIG. 20, when the light sources are arranged such that the irradiation directions of the illumination lights differ by 90°, with a surface defect of a concave shape, a portion closer to the light source is dark and a portion on the opposite side to the light source is bright, and with a surface defect of a convex shape, a portion closer to the light source is bright and a pat on the opposite side to the light source is dark. Specifically, when a surface defect has a concave shape, a two-dimensional image acquired by the illumination light from the light source 2a is as shown in FIG. 21 (a), and a two-dimensional image acquired by the illumination light from the light source 2b is as shown in FIG. 21 (b). Therefore, the difference image is to have a brightness pattern having a contrast from lower left to upper right as shown in FIG. 21 (c). Accordingly, by rotating the brightness pattern by 45°, a concavo-convex surface defect can be detected by a method similar to a case of the brightness pattern in a bilateral direction. Moreover, by using three or more light sources, difference images of more than one pattern can be acquired, and detection accuracy of a surface defect can be further improved.

Moreover, although in the present embodiment, a concavo-convex surface defect is detected when the illumination lights are irradiated from direction symmetric to a normal of an inspection target portion, the irradiation direction of the illumination lights are not necessarily required to be symmetrical. Furthermore, the surface defect detection processing of the present embodiment can be applied to general manufacturing lines of steel products regardless of hot working or cold working.

Example

In the present example, the surface defect detection processing using the first positional-relation calculation method described above was applied to an inspection target portion in which a pit flaw was formed and a sound inspection target portion in which a pit flaw was not formed. In the present example, as a feature quantitity, a brightness ratio, an area ratio, and a degree of circularity of a bright portion and a dark portion were calculated. The degree of circularity is a value normalized by dividing an area of a bright portion and a dark portion by a square of a length of a perimeter thereof, and is used to determine whether a shape of a bright portion and a dark portion is close to circle. As it is unlikely that the brightness and the area in right and left signals are significantly inconsistent if a surface defect is due to the same cause, by evaluating a balance between right and left using the brightness ratio and the area ratio, detection accuracy of a surface defect is improved. Furthermore, as it is quite unlikely that a bright portion and a dark portion to evaluate a shade is in a circular shape, and a subject in a shape close to circle can be determined to have another cause, the degree of circularity was included in the feature quantities. Moreover, it was arranged to be able to detect only a surface defect having an area equal to or larger than a predetermined value by calculating areas of a bright portion and a dark portion. Detection results are shown in FIG. 22. As shown in FIG. 22, according to the present example, a pit flaw and a sound portion in which a pit flaw is not formed can be distinguished from each other accurately.

[Incident Angle of Illumination Light]

Finally, an optimal range of an incident angle of an illumination light of each light source with respect to an inspection target portion is reviewed. The present invention features irradiation of illumination lights to an inspection target portion from two or more different directions, and in the following, for simplicity, an optimal range of an incident angle of an illumination light when illumination lights are irradiated from oblique directions symmetric to each other about a normal vector of an inspection target portion is reviewed. Furthermore, in the following, an intensity of an image signal of a surface defect when it is assumed that a surface condition of an inspection target portion is uniform is reviewed. Moreover, in the following, a left side of a screen and a right side of the screen when an illumination light is irradiated from a left side in a field of view of an area sensor 4 are expressed as "closer side" and "far side", respectively, and a left side of the screen and the right side of the screen when an illumination light is irradiated from a right side of the field of view of the area sensor 4 are expressed as "far side" and "closer side", respectively.

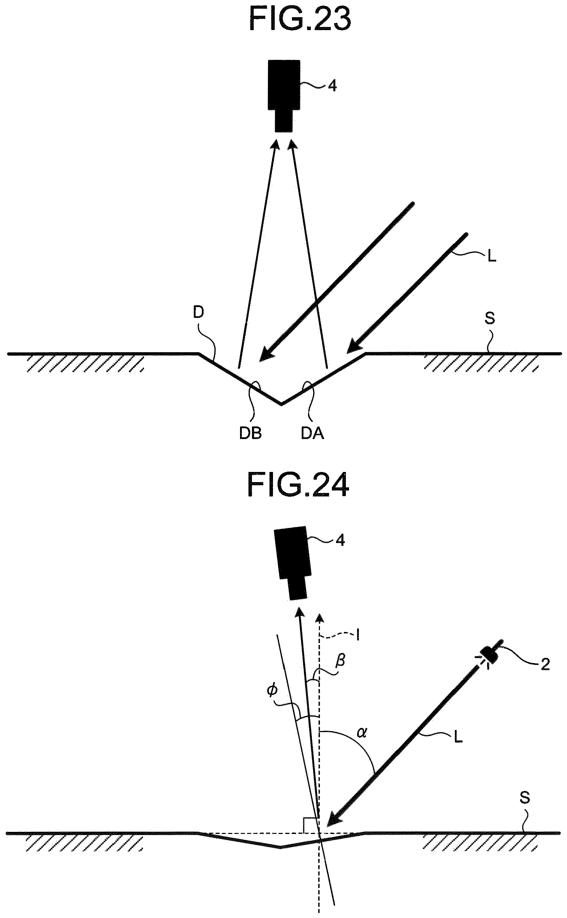

As a surface defect generally has a concave and convex shape, a direction of a normal vector at a surface defect portion differs from a normal vector at a sound portion. Therefore, conditions of light emission and reception angles of illumination light in the surface defect portion differs from those of the sound portion, and a brightness pattern is generated. Specifically, as shown in FIG. 23, a case in which a concave defect D having a V shape is present on a steel product surface S, and the illumination lights L are irradiated thereto from left and right directions, and an image of the steel product surface S is captured from a front side by the area sensor 4 is considered. In this case, on a plane DA of the concave defect D on a closer side to the light source on a right side, an irradiated light quantity of the illumination light L per unit area becomes small compared to a flat portion, and the intensity of an image signal decreases as it departs from a mirror reflection condition (regular reflection condition). On the other hand, on a plane DB of the concave defect D on a far side from the light source on the right side, the irradiation light quantity of the illumination light L per unit area becomes large compared to the flat portion, and the intensity of an image signal increases as it becomes closer to the mirror reflection condition. The mirror reflection condition described above is a condition that the light source and the area sensor are positioned symmetrically about a normal vector of a surface of a sound portion, that is a condition that an incident angle and a reflection angle of an illumination light are equal to each other.

As the positional relationship between the light source and the surface of the concave defect D is reversed for the light source on the right side and the light source on the left side, a positional relationship between a bright portion and a dark portion is also reversed for the light source on the right side and the light source on the left side. Therefore, when two images captured by the area sensors 4 are subjected to the difference processing, a brightness pattern can be acquired. That is, according to how inclined relative to the flat portion, the intensity of an image signal varies. A sound portion also has surface roughness, and is not completely flat. Therefore, when the incident angle of the illumination light is increased to significantly large, a signal caused by minute concavity and convexity on a surface becomes conspicuous, to be a cause of a noise.

Next, a physical phenomenon relating to a detection performance for a surface defect is explained. To study this physical phenomenon more precisely, an optical system is modeled in the following. In this example, a simplified Torrance-Sparrow model, which is one of a reflection model according to a physical phenomenon widely used in an optical simulation is used (cited literature (refer to "Illumination Distribution from Shadows", Ito, et al., Journal of Information Processing: Computer Vision and Image Media, vol. 41, No. SIG 10, Dec. 2000). Although the optical system is supposed to be handled by a three-dimensional model, for simplicity, a two-dimensional model is used in the following.

FIG. 24 is a diagram showing a configuration of a two-dimensional model of the optical system. As shown in FIG. 24, when an incident angle of the illumination light L from the light source 2 with respect to the steel product surface S (normal vector I) is $\alpha$, a reflection angle of the illumination light L entering the area sensor 4 is $\beta$, an inclination of an inspection target portion microscopically captured relative to an inclination of a reference surface of the steel product surface S as 0 is $\phi$, an incident light quantity of the illumination light L from the light source 2 to the inspection target portion is $I_0$, and a parameter (vector volume) expressing a surface condition of the inspection target portion is $k=(K_1, K_2, \sigma)$, a light quantity I of the illumination light L that enters the area sensor 4 is expressed by Equation (8) below.

$$i = I_0\, R(\alpha, \beta, \phi, \mathbf{k}) \tag{8}$$

Moreover, R in Equation (8) indicates a function of a reflection intensity of the illumination light L, and is calculated by Equation (9) below.

$$R(\alpha, \beta, \phi, \mathbf{k}) = K_1 \cos(\alpha - \phi) + K_2 \frac{1}{\cos(\phi - \beta)} e^{-\frac{(\phi - \frac{\alpha+\beta}{2})^2}{2\sigma^2}} \tag{9}$$

The first term on the right side of Equation (9) indicates an intensity of diffuse reflection of the illumination light L, the second term indicates an intensity of the mirror reflection of the illumination light L, and a reflection intensity of the illumination light L is expressed by a sum of the first term and the second term. In the diffuse reflection, the illumination light L diffuses in all directions after entering the inspection target portion. On the other hand, in the mirror reflection, the illumination light L reflects in a direction symmetric to the normal vector of the inspection target portion the strongest, and the intensity of the illumination light L is attenuated as departing from the direction as Gaussian function. Moreover, $k=(K_1, K_2, \sigma)$ is the term derived from a surface condition of the inspection target portion, and determines a spreading degree in the mirror reflection, and an intensity ratio of the mirror reflection and the diffuse reflection. However, when the incident angle $\alpha$ and the inclination $\phi$ satisfy a condition: $\pi/2 \leq \alpha+\phi$ or $\alpha+\phi \leq -\pi/2$, the inspection target portion itself is to be a shade, and the illumination light L is not irradiated, and therefore the reflection intensity of the illumination light L is 0.

When brightness $i_1, i_2$ at certain points (hereinafter, described as target surface) on an image of the inspection target portion when the illumination light is irradiated from one light source (left side) and when the illumination light is irradiated from the other light source (right side) are calculated, expressing the intensity of an image signal received by the area sensor 4 by using such a two-dimensional model, the brightness $i_1, i_2$ are expressed by Equations (10), (11).

$$i_1 = I_1\, R(\alpha_1, \beta, \phi, \mathbf{k}) \tag{10}$$

$$i_2 = I_2 \, R(\alpha_2, \beta, \phi, \mathbf{k}) \tag{11}$$

In Equations (10), (11), $I_1$, $I_2$ indicate the incident light quantities of the illumination lights L to the target surface, $\alpha_1$, $\alpha_2$ indicate the incident angles of the illumination lights from the respective light sources to the target surface, $\beta$ indicates a reflection angle of the illumination light L that enters the area sensor 4, $\phi$ indicates an inclination of the target surface microscopically captured relative to an inclination of a reference surface as 0, and k is a parameter that expresses a surface condition of the target surface.

When the brightness $i_1$, $i_2$ are calculated, the shading correction is then performed on the brightness $i_1$, $i_2$ to remove unevenness in a light quantity of the light source 2 or unevenness in optical conditions. Although there are various methods for the shading correction, a method generally used in which a vector obtained by averaging a sum of brightness of respective pixels in a vertical direction (referred to as "vertical average vector") is generated, subtraction and division are performed on all rows of an image by the vertical average vector, and a signal is further subjected to constant multiplication to be normalized was used. Furthermore, on a resultant image, the same processing is performed also in a horizontal direction, thereby performing the shading correction. In detail, when signals when the target surface is a sound portion are expressed as $i_{10}$, $i_{20}$, and a surface condition of the sound portion is expressed as $k_0$, it is expressed as in Equations (12), (13) below.

$$i_{10} = I_1 \, R(\alpha_1, \beta, 0, \mathbf{k}_0) \tag{12}$$

$$i_{20} = I_2 \, R(\alpha_2, \beta, 0, \mathbf{k}_0) \tag{13}$$

Therefore, luminance values of an image after the shading correction and of the difference image are expressed as Equations (14) to (16) below. Equation (14) expresses the brightness $i_1$ after the shading correction, Equation (15) expresses the brightness $i_2$ after the shading correction, and Equation (16) expresses the brightness of the difference image.

$$\tilde{i}_1 = \frac{I_1 \, R(\alpha_1, \beta, \phi, \mathbf{k})}{I_1 \, R(\alpha_1, \beta, 0, \mathbf{k}_0)} = \frac{R(\alpha_1, \beta, \phi, \mathbf{k})}{R(\alpha_1, \beta, 0, \mathbf{k}_0)} \tag{14}$$

$$\tilde{i}_2 = \frac{I_2 \, R(\alpha_2, \beta, \phi, \mathbf{k})}{I_2 \, R(\alpha_2, \beta, 0, \mathbf{k}_0)} = \frac{R(\alpha_2, \beta, \phi, \mathbf{k})}{R(\alpha_2, \beta, 0, \mathbf{k}_0)} \tag{15}$$

$$i_d = \tilde{i}_1 - \tilde{i}_2 = \frac{R(\alpha_1, \beta, \phi, \mathbf{k})}{R(\alpha_1, \beta, 0, \mathbf{k}_0)} - \frac{R(\alpha_2, \beta, \phi, \mathbf{k})}{R(\alpha_2, \beta, 0, \mathbf{k}_0)} \tag{16}$$

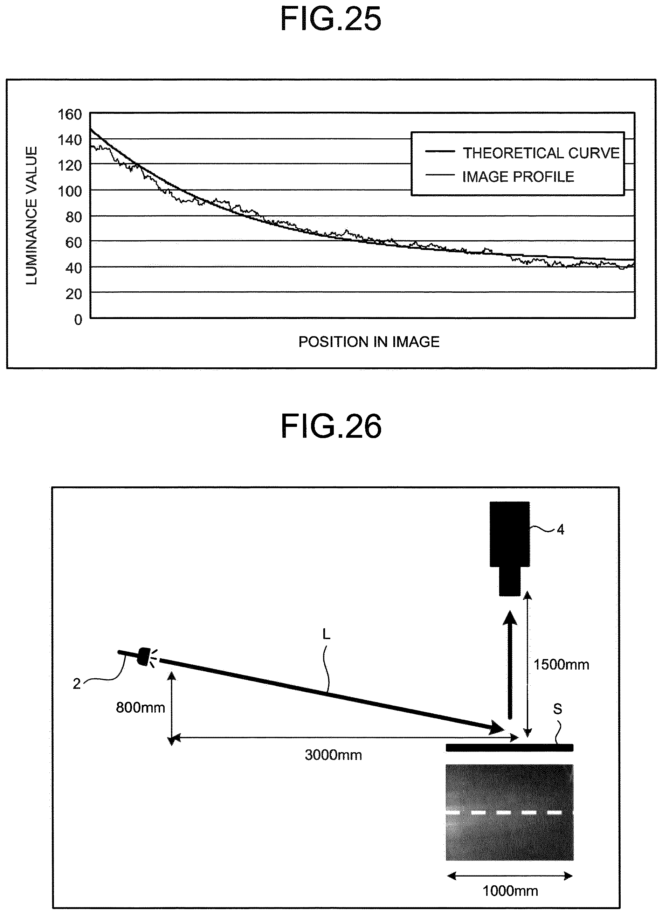

In this review, an optimal range of an incident angle of the illumination light was derived from the intensity of image signals of the sound portion and the surface defect portion by using the above model. At the derivation, first, a parameter expressing a surface condition of the steel product surface was experimentally acquired. Specifically, an image of a steel product that has a general surface condition was actually captured by an area sensor, and a brightness profile (image profile) of an actual image signal was adjusted to a brightness profile (theoretical curve) of a theoretical image signal that had been acquired by simulating an identical optical system. A result of adjustment is shown in FIG. 25, and a configuration of the optical system used in the experiment is shown in FIG. 26. As a result, the parameter expressing the surface condition of the steel product surface was acquired as $k=(K_1, K_2, \sigma)=(1000, 200, 0.21)$. Next, a change of the S/N ratio of the image signal with respect to a change of an incident angle of the illumination light was simulated by using the acquired parameter k expressing the surface condition.

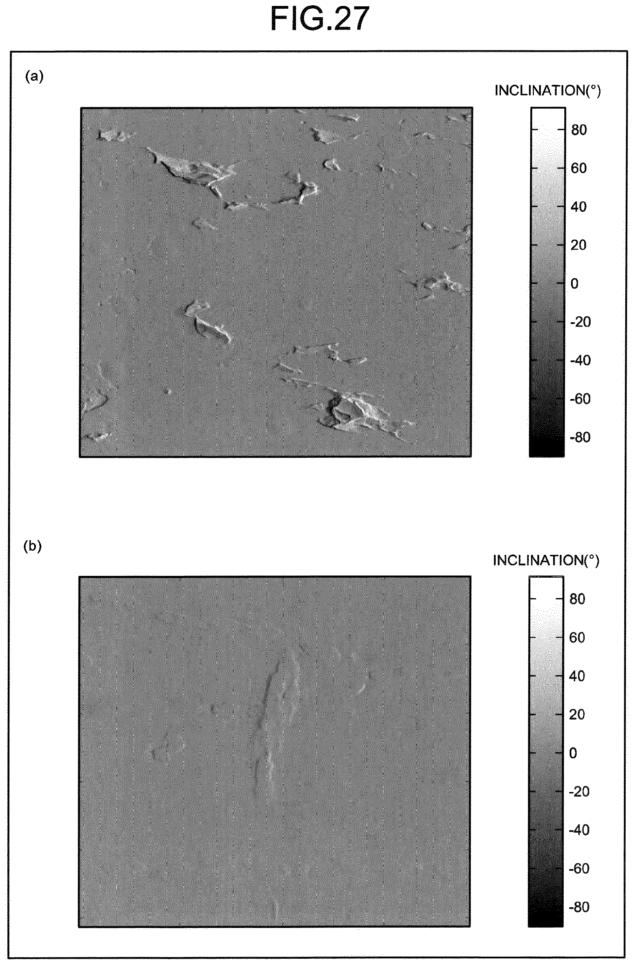

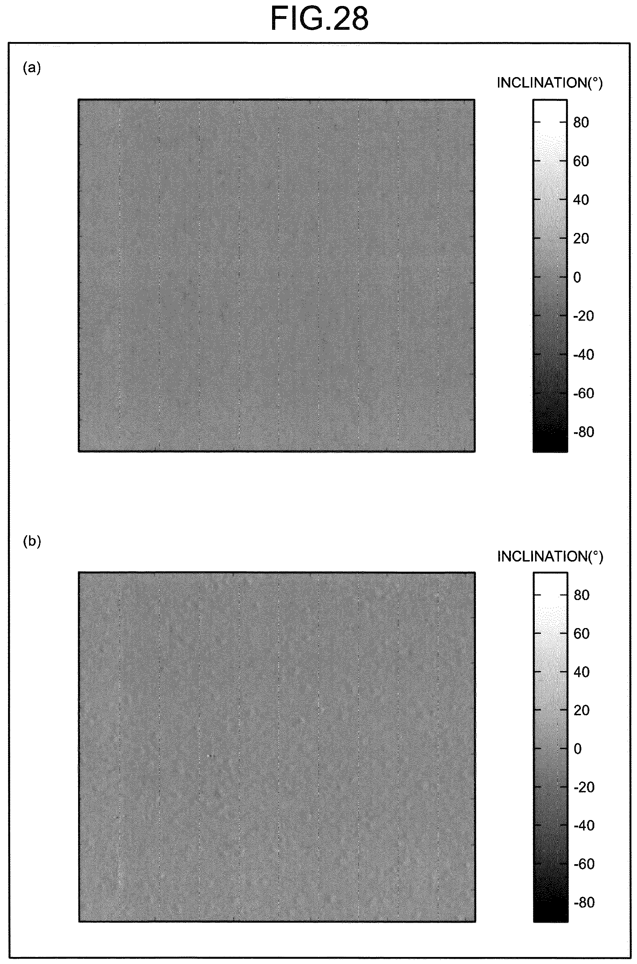

For simplicity, an imaging direction of the area sensor is on a normal of the reference surface, that is, $\beta=0$, illumination lights were irradiated from bilaterally symmetrical positions, and parameters expressing the surface conditions at the surface defect portion and the sound portion are identical. In this surface defect detection processing, a contributing term is the inclination of the steel product surface. therefore, before simulating a change of the S/N ratio of the image signal with respect to a change of the incident angle of the illumination light, surface shapes of the sound portion and the surface defect portion were measured, and the inclination relative to the reference surface was calculated. The inclination herein signifies an angle that is formed by two vectors at orthogonal projection when a normal vector of each surface and a normal vector of the steel product reference surface are orthogonally projected on a plane formed by the light source, the area sensor, and the inspection target portion. FIG. 27 and FIG. 28 show the inclinations of the surface defect portion and the sound portion, respectively.

As shown in FIG. 27, the surface of the surface defect portion has an inclination of 20° or larger for the smallest. To the contrary, as shown in FIG. 28, a standard deviation of the inclination of the surface of the sound portion relative to the reference surface is about 3° to 5°. Generally, a signal of the surface defect portion is detected on a surface of the sound portion having some surface roughness. Therefore, regarding an image signal corresponding to an inclination of a surface of about 3° to 5° as a noise, a change of the S/N ratio with respect to a change of an incident angle of the illumination light was evaluated using an image signal corresponding to an inclination of a surface equal to or larger than 20°. When the inclination of the surface of the surface defect portion (defect angle) is $\phi_1$, the inclination of the surface of the sound portion is $\phi_2$, and the incident angle of the illumination light is $\alpha$, the S/N ratio can be expressed as in Equations (17), (18) below.

$$S = \frac{R(\alpha,0,\phi_1,\mathbf{k})}{R(\alpha,0,0,\mathbf{k})} - \frac{R(-\alpha,0,\phi_1,\mathbf{k})}{R(-\alpha,0,0,\mathbf{k})} \tag{17}$$

$$N = \frac{R(\alpha,0,\phi_2,\mathbf{k})}{R(\alpha,0,0,\mathbf{k})} - \frac{R(-\alpha,0,\phi_2,\mathbf{k})}{R(-\alpha,0,0,\mathbf{k})} \tag{18}$$

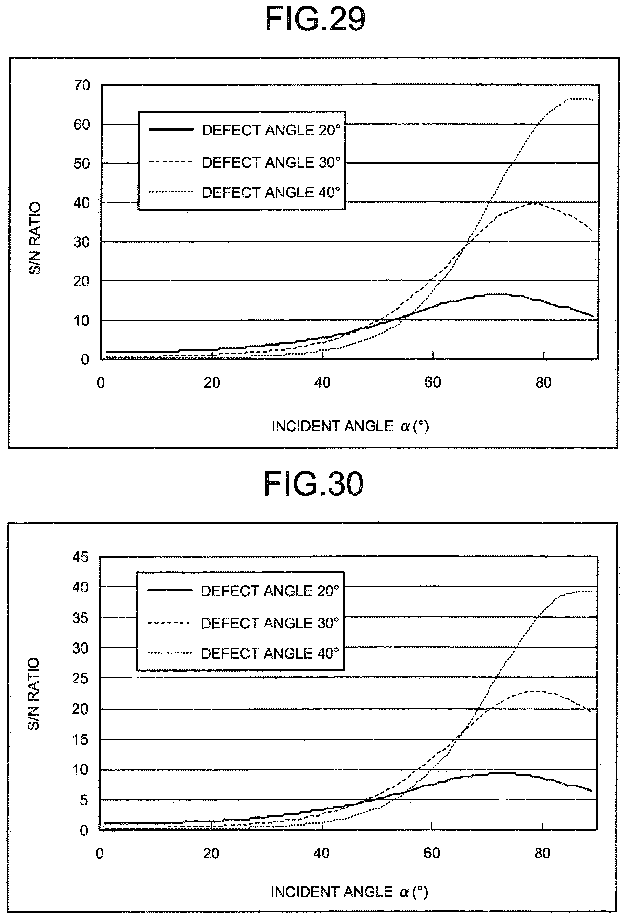

A result of evaluation of the S/N ratio with respect to a change of the incident angle $\alpha$ of the illumination light L assuming that the defect angle $\phi_1$=20°, 30°, 40°, and the inclination of the surface of the sound portion $\phi_2$=3° is shown in FIG. 29, and a result assuming $\phi_2$=5° is shown in FIG. 30. As shown in FIGS. 29, 30, when the incident angle $\alpha$ of the illumination light is within a range of 60° to 82.5°, the S/N ratio increased. Therefore, it is confirmed that the optical system should be designed such that the incident angle $\alpha$ of the illumination light is within the range of 60° to 82.5° to detect a surface defect having a shallow angle with a low S/N ratio. In FIG. 6, the incident angle $\alpha$ of the illumination light is controlled to be 55° or smaller by the light quantity evaluation. This is because the light quantity of the reflection light significantly decreases if the incident angle $\alpha$ of the illumination light is increased. When the light quantity of the reflection light can be sufficiently obtained, the incident angle $\alpha$ of the illumination light is preferable to be within the range of 60° to 82.5°.

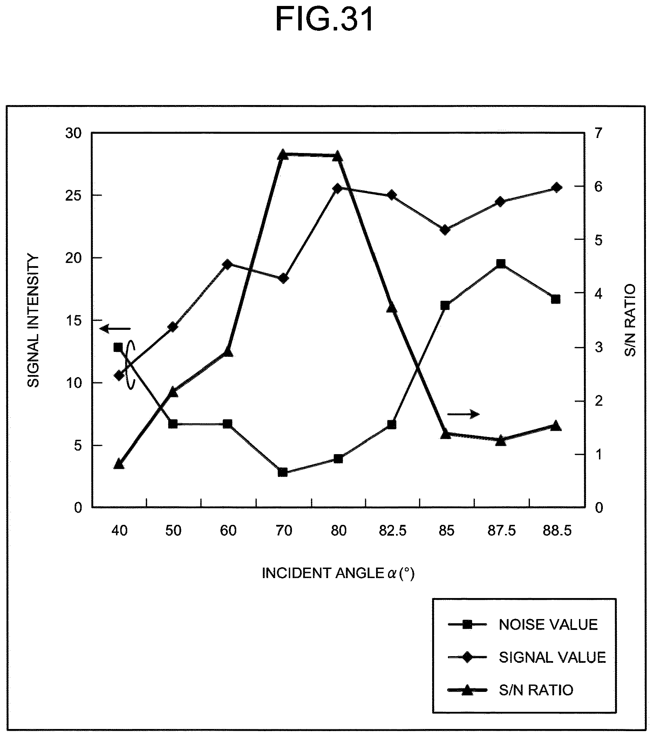

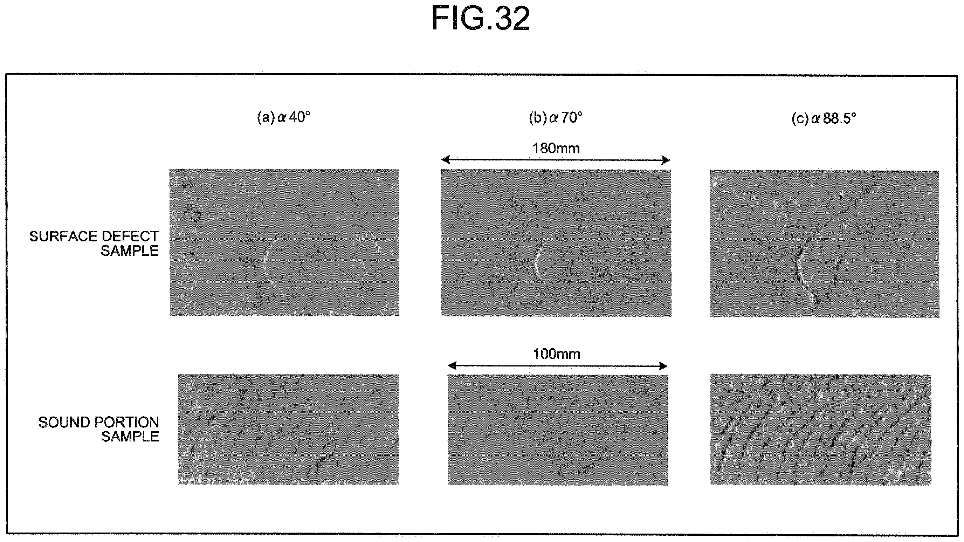

Moreover, regarding the review of the optimal incident angle of the illumination light, laboratory tests were conducted similarly using the light source, test samples, and the area sensor. A result of evaluation of the S/N ratio by performing the image processing described above actually changing the parameters of the light source is shown in FIG. 31. As shown in FIG. 31, the S/N ratio was highest when the incident angle $\alpha$ of the illumination light was in the range of 60° to 82.5°, and it was confirmed to match with the simulation result. Moreover, the difference image acquired at this time is shown in FIG. 32. As shown in FIG. 32, in the surface defect portion, as the incident angle $\alpha$ of the illumination light increased, the signal intensity of the difference image increased. On the other hand, in the sound portion, after the signal intensity of the difference image once decreased when the incident angle $\alpha$ of the illumination light is 70°, the signal intensity of the difference image increased when the incident angle of the illumination light was further increased. The phenomenon that the signal intensity of the difference image once decreases when the incident angle $\alpha$ of the illumination light is 70° is considered be caused because the surface condition of the inspection target portion was different, and there was unevenness in a mirror property and a diffusion property even within the sound portion, not just due to the emission and reception angle of the illumination light.

Because the light quantity of the reflection light significantly decreases when the incident angle $\alpha$ of the illumination light L is increased to be large, this condition is supposed to be used only in a state in which the light quantity of the reflection light is obtained. Therefore, by designing the optical system such that the incident angle $\alpha$ of the illumination light is within the range of 60° to 82.5°, a defect with a relatively shallow angle can also be detected with a high S/N ratio. Furthermore, although the present embodiment has been explained with a steel plate, similar consideration and application are possible for general steel products.

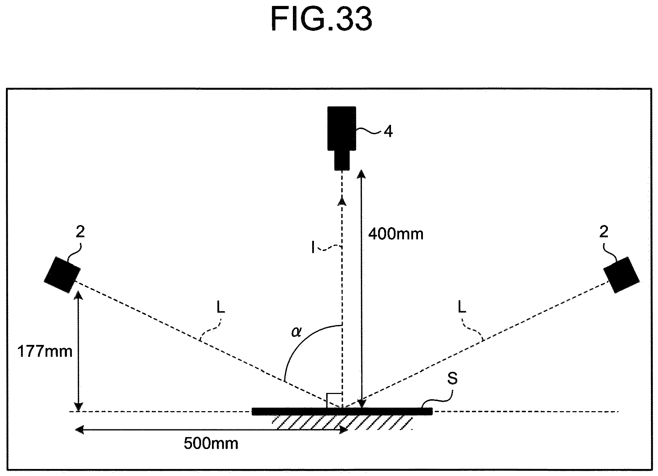

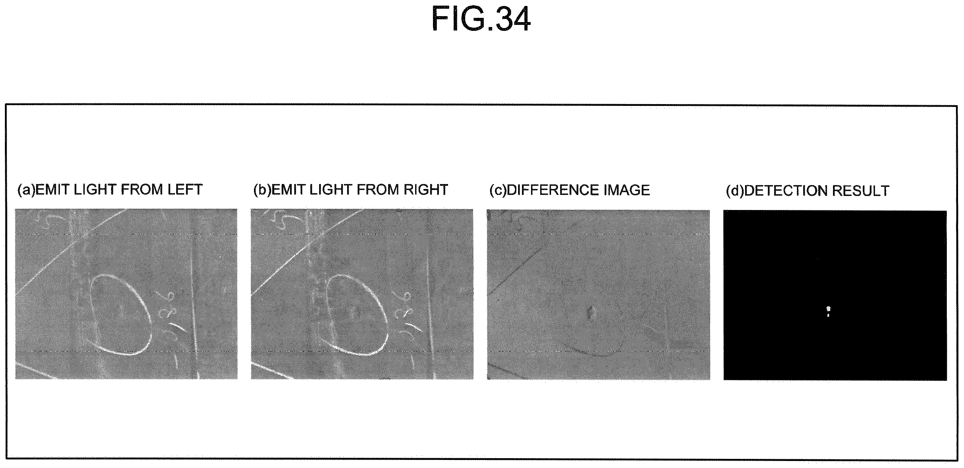

Finally, an experimental result of the surface defect detection processing that was performed on a steep plate by using the optical system in which the incident angle $\alpha$ of the illumination light satisfies the above condition is shown. FIG. 33 shows a configuration of the optical system that was used in this experiment. The incident angle $\alpha$ of the illumination light L toward a center of a field of view was 70°, the resolution of the area sensor 4 was 1,0 mm/pixel, and the inspection range was 350 mm in width×270 mm in length. The result of the surface defect detection processing is shown in FIG. 34. As shown in FIG. 34(d), it was confirmed that the surface defect portion has a brightness pattern, and the surface defect was able to be detected. The surface defect portion shown in FIG. 34(d) is a portion in which a bright portion and a dark portion were overlapped with each other by expansion, and was obtained by acquiring an image signal corresponding to the inclination of 20° or larger.

As above, the embodiments to which the invention that has been achieved by the inventors have been explained, but description and drawings being a part of the disclosure of the present invention according to the present embodiment are not intended to limit the present invention. For example, a surface defect of a steel product can be detected by using the surface defect detection method according to the present invention, and the steel product can be manufactured based on the detection results. Thus, other embodiments, examples, operation techniques, and the like by a person skilled in the art or the like based on the present embodiment are all included in the scope of the present invention.

Industrial Applicability

According to the present invention, a surface defect detection method and a surface defect detection device that can distinguish a scale or a harmless pattern from a surface defect accurately can be provided. Moreover, according to the present invention, a method for manufacturing a steel product that enables to manufacture a steel product by accurately distinguishing a scale or a harmless pattern from a surface defect, and based on a distinction result can be provided.

Reference Signs List

1 SURFACE DEFECT DETECTION DEVICE
2, 2a, 2b LIGHT SOURCE
3 FUNCTION GENERATOR
4, 4a, 4b AREA SENSOR
5 IMAGE PROCESSING DEVICE
6 MONITOR
L ILLUMINATION LIGHT
P STEEL PIPE

**Claims**

1. A surface defect detection method of optically detecting a surface defect of a steel product, the method comprising:

    an irradiating step of irradiating illumination lights from different directions to an identical inspection target portion by using at least two distinguishable light sources; and
    a detecting step of acquiring images by reflection lights of the respective illumination lights and detecting a surface defect in the inspection target portion by performing difference processing between the acquired images, wherein
    an incident angle of the illumination lights of the respective light sources are within a range of 60° to 82.5° relative to the inspection target portion.

2. The surface defect detection method according to claim 1, wherein
    the irradiating step includes a step of irradiating illumination lights by causing at least two flash light sources to emit light repeatedly such that light emission timing does not synchronize with each other, and/or a step of irradiating illumination lights of light sources, wavelength regions of which do not overlap with each other, and
    when the illumination lights of the light sources having the wavelength regions not overlapping one another are irradiated simultaneously, the detecting step includes a step of acquiring an image by a reflection light of each of the illumination lights by separating reflection lights of the respective mixed illumination lights by using filters that pass light having a wavelength identical to a wavelength of the illumination lights.

3. The surface defect detection method according to claim 1 or 2, wherein
    the detecting step includes a first determining step of extracting a bright portion and a dark portion of an image that has been acquired by performing difference processing on the acquired images, and of determining whether a concavo-convex surface defect is present based on a positional relationship between the extracted bright portion and dark portion, and an irradiation directions of the illumination lights.

4. A surface defect detection device that optically detects a surface defect of a steel product, the device comprising:

an irradiating unit that irradiates illumination lights from different directions to an identical inspection target portion by using at least two distinguishable light sources; and

a detecting unit that acquires images by reflection lights of the respective illumination lights and that detects a surface defect in the inspection target portion by performing difference processing between the acquired images, wherein

an incident angle of the illumination lights of the respective light sources are within a range of 60° to 82.5° relative to the inspection target portion.

5. A method for manufacturing a steel product comprising

a step of detecting a surface defect of a steel product by using the surface defect detection method according to any one of claims 1 to 3, and of manufacturing a steel product based on a result of detection.

# FIG.1

# FIG.2

# FIG.3

EACH TRIGGER

T

(a)AREA SENSOR 4a

d

(b)LIGHT SOURCE 2a

(c)AREA SENSOR 4b

(d)LIGHT SOURCE 2b

TIME

# FIG.4

(a) 20mm

(b)

(c)

+
−
11

DEFECT HAVING CONCAVITY AND CONVEXITY

SCALE, HARMLESS PATTERN

4b 4a
2b 2a
P

# FIG.5

# FIG.6

# FIG.7

# FIG.8

# FIG.9

# FIG.10

(a)

15mm

LUMINANCE
VALUE

DEFECT

CONVEYANCE
DIRECTION

(b)

LUMINANCE
VALUE

DEFECT

CONVEYANCE
DIRECTION

(c)

11

LUMINANCE
VALUE

DEFECT

CONVEYANCE
DIRECTION

EP 3 315 952 A1

# FIG.11

(a)

LUMINANCE
VALUE

CONVEYANCE
DIRECTION

(b)

LUMINANCE
VALUE

CONVEYANCE
DIRECTION

11

−
+

(c)

LUMINANCE
VALUE

CONVEYANCE
DIRECTION

# FIG.12

40c   40b
2a
40d   40a
4b  4a
20b,30b   20a,30a
P1

# FIG.13

51b   51a
50b   50a
P1

# FIG.14

(a)
CONCAVE SHAPE

(b)
CONVEX SHAPE

# FIG.15

50mm

# FIG.16

# FIG.17

(a)

L4

(b)

# FIG.18

(a)

(b)

# FIG.19

(a)

(b)·

# FIG.20

# FIG.21

(a)

LIGHT
EMISSION
DIRECTION

LIGHT EMISSION DIRECTION

(b)

DIFFERENCE
IMAGE

(c)

CONTRAST IS GENERATED
FROM LOWER LEFT TO
UPPER RIGHT

# FIG.22

| DIFFERENCE IMAGE | BRIGHT PORTION IMAGE | DARK PORTION IMAGE | AREA RATIO | SIGNAL INTENSITY RATIO | BRIGHT PORTION CIR-CULARITY | DARK PORTION CIR-CULARITY | DETERMINATION RESULT FROM FEATURE QUANTITY | DETERMINATION RESULT FROM COMPARISON WITH ACTUAL PRODUCT |
|---|---|---|---|---|---|---|---|---|
| | | | 0.88 | 0.79 | 0.68 | 0.755 | DEFECT | DEFECT |
| | | | 0.82 | 0.72 | 0.74 | 0.36 | DEFECT | DEFECT |
| | | | 0.54 | 0.62 | 0.67 | 0.40 | SOUND PORTION | SOUND PORTION |
| | | | 0.12 | 0.76 | 0.57 | 0.81 | SOUND PORTION | SOUND PORTION |

# FIG.23

# FIG.24

# FIG.25

# FIG.26

# FIG.27

(a)

INCLINATION(°)

(b)

INCLINATION(°)

# FIG.28

(a)

INCLINATION(°)

(b)

INCLINATION(°)

# FIG.29

# FIG.30

# FIG.31

# FIG.32

(a) α 40°　　　　　(b) α 70°　　　　　(c) α 88.5°

180mm

SURFACE DEFECT
SAMPLE

100mm

SOUND PORTION
SAMPLE

EP 3 315 952 A1

# FIG.33

# FIG.34

EP 3 315 952 A1

(a)EMIT LIGHT FROM LEFT    (b)EMIT LIGHT FROM RIGHT    (c)DIFFERENCE IMAGE    (d)DETECTION RESULT

## INTERNATIONAL SEARCH REPORT

| | International application No. |
|---|---|
| | PCT/JP2016/068524 |

| A. CLASSIFICATION OF SUBJECT MATTER |
|---|
| *G01N21/892*(2006.01)i |
| According to International Patent Classification (IPC) or to both national classification and IPC |

| B. FIELDS SEARCHED |
|---|
| Minimum documentation searched (classification system followed by classification symbols) |
| G01N21/84-21/958 |
| Documentation searched other than minimum documentation to the extent that such documents are included in the fields searched |
| Jitsuyo Shinan Koho          1922–1996   Jitsuyo Shinan Toroku Koho   1996–2016<br>Kokai Jitsuyo Shinan Koho    1971–2016   Toroku Jitsuyo Shinan Koho   1994–2016 |
| Electronic data base consulted during the international search (name of data base and, where practicable, search terms used) |
| JSTPlus/JMEDPlus/JST7580(JDreamIII) |

| C. DOCUMENTS CONSIDERED TO BE RELEVANT | | |
|---|---|---|
| Category* | Citation of document, with indication, where appropriate, of the relevant passages | Relevant to claim No. |
| X | JP 2010-223621 A  (Sumitomo Metal Industries, Ltd.),<br>07 October 2010 (07.10.2010),<br>paragraphs [0002], [0022], [0042], [0045]; fig. 3, 5<br>(Family: none) | 1-5 |
| Y | JP 4-294204 A  (Hitachi, Ltd.),<br>19 October 1992 (19.10.1992),<br>paragraphs [0001] to [0002], [0009], [0020], [0022] to [0024]; fig. 5 to 6<br>(Family: none) | 1-5 |

| [×]   Further documents are listed in the continuation of Box C. | [ ]   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 August 2016 (30.08.16) | 13 September 2016 (13.09.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

## INTERNATIONAL SEARCH REPORT

International application No.

PCT/JP2016/068524

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-514386 A (Spectra-Physics VisionTech Oy.), 11 September 2001 (11.09.2001), paragraph [0071]; fig. 1 & US 6166393 A column 15, lines 3 to 9; fig. 1 & WO 1999/010730 A1 & EP 898163 A1 & DE 69703487 D & DE 69703487 T & AT 197503 T & ES 2153150 T | 1-5 |
| Y | JP 2000-241362 A (Spectra-Physics VisionTech Oy.), 08 September 2000 (08.09.2000), paragraph [0001]; fig. 3 & US 6327374 B1 column 1, lines 5 to 8; fig. 3 & EP 1030173 A1 | 1-5 |
| Y | JP 59-52735 A (Kawasaki Steel Corp.), 27 March 1984 (27.03.1984), page 1, lower right column, lines 1 to 7; fig. 1 (Family: none) | 1-5 |
| Y | JP 5-118997 A (Toyoda Gosei Co., Ltd.), 14 May 1993 (14.05.1993), paragraph [0006]; fig. 4 (Family: none) | 1-5 |
| A | JP 2006-329919 A (Sumitomo Metal Mining Co., Ltd.), 07 December 2006 (07.12.2006), entire text (Family: none) | 1-5 |
| A | EP 2693403 A1 (AIT Austrian Institute of Technology GmbH), 28 May 2013 (28.05.2013), entire text & AT 513126 A | 1-5 |
| P,A | WO 2015/098929 A1 (JFE Steel Corp.), 02 July 2015 (02.07.2015), entire text & JP 2015-125089 A & JP 2015-210150 A & JP 2015-210151 A & CA 2934796 A | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11037949 A

- JP 59052735 A

**Non-patent literature cited in the description**

- **ITO et al.** Illumination Distribution from Shadows. *Journal of Information Processing: Computer Vision and Image Media,* December 2000, vol. 41 (10